(19) Europäisches Patentamt
European Patent Office
Office européen des brevets

(11) EP 3 386 305 B1

(12) **FASCICULE DE BREVET EUROPEEN**

(45) Date de publication et mention de la délivrance du brevet:
**04.09.2019 Bulletin 2019/36**

(21) Numéro de dépôt: **16809711.1**

(22) Date de dépôt: **06.12.2016**

(51) Int Cl.:
***A01N 43/18*** *(2006.01)* ***A01P 11/00*** *(2006.01)*

(86) Numéro de dépôt international:
**PCT/EP2016/079859**

(87) Numéro de publication internationale:
**WO 2017/097748 (15.06.2017 Gazette 2017/24)**

(54) **COMPOSITION ET APPÂT RODONTICIDE COMPRENANT DE LA DIFÉTHIALONE, PROCÉDÉ DE LUTTE CONTRE DES RONGEURS CIBLES NUISIBLES**

ZUSAMMENSETZUNG UND RODENTIZIDER KÖDER MIT DIFETHIALON UND VERFAHREN ZUR BEKÄMPFUNG VON BESTIMMTEN NAGERSCHÄDLINGEN

COMPOSITION AND RODENTICIDE BAIT COMPRISING DIFETHIALONE AND METHOD FOR CONTROLLING TARGET RODENT PESTS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **11.12.2015 FR 1562236**

(43) Date de publication de la demande:
**17.10.2018 Bulletin 2018/42**

(73) Titulaires:
- **Liphatech**
  **47480 Pont-du-Casse (FR)**
- **Institut Enseignement Supérieur et Recherche en Alimentation Santé Animale Sciences Agronomiques et Environnement (Vet Agro Sup)**
  **69280 Marcy-l'Etoile (FR)**

(72) Inventeurs:
- **CARUEL, Hervé**
  **47310 Moncaut (FR)**
- **BENOIT, Etienne**
  **69009 Lyon (FR)**
- **FOUREL, Isabelle**
  **01700 Miribel (FR)**
- **LATTARD, Virginie**
  **69009 Lyon (FR)**

(74) Mandataire: **Cabinet BARRE LAFORGUE & associés**
**35, rue Lancefoc**
**31000 Toulouse (FR)**

(56) Documents cités:
**EP-A2- 0 147 052**
**WO-A1-2015/189320**
**WO-A1-2015/189321**

- **J. LECHEVIN ET AL: "ACTIVITY OF LM 2219 (DIFETHIALONE), A NEW ANTICOAGULANT RODENTICIDE, IN COMMENSAL RODENTS", VERTEBRATE PEST CONFERENCE PROCEEDINGS, vol. 2219, 1988, pages 59-63, XP055272711,**

Remarques:
Le dossier contient des informations techniques présentées postérieurement au dépôt de la demande et ne figurant pas dans le présent fascicule.

EP 3 386 305 B1

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

## Description

L'invention concerne une composition comprenant de la diféthialone, un appât rodonticide comprenant une telle composition et un procédé de lutte contre des rongeurs cibles nuisibles. L'invention concerne donc le domaine technique de la lutte contre des populations de rongeurs cibles nuisibles.

Il est connu d'utiliser des appâts rodonticides faisant office de poison pour des rongeurs cibles nuisibles. On connait de EP 2 090 164 que la diféthialone est un anticoagulant de deuxième génération agissant à simple dose. US 2005/181003 décrit un appât rodonticide sous forme de gel comprenant de la diféthialone dans une proportion massique de 25 ppm.

Un tel appât est susceptible d'être consommé par des animaux autres que des rongeurs cibles nuisibles lorsqu'il est mis à la disposition de rongeurs cibles nuisibles. Il peut être consommé directement (consommation primaire) par des animaux domestiques ou des animaux de compagnie. Il peut aussi être consommé accidentellement par des humains. Une telle consommation peut produire chez ces animaux domestiques, chez ces animaux de compagnie ou chez des humains un empoisonnement qui peut être létal.

En outre, une fraction de la diféthialone de ces appâts rodonticides peut être ingérée (consommation secondaire) par des animaux -notamment par des oiseaux- prédateurs de rongeurs nuisibles affaiblis ayant consommé un tel appât rodonticide ou par des animaux charognards de rongeurs nuisibles morts d'avoir consommé un tel appât rodonticide. Cette consommation secondaire est susceptible d'entrainer à terme la mort de ces animaux prédateurs ou charognards qui peuvent être des animaux -notamment des oiseaux-appartenant à des espèces protégées.

L'invention vise donc à pallier ces inconvénients en proposant une composition comprenant de la diféthialone, un appât rodonticide comprenant une telle composition et un procédé de lutte contre des rongeurs cibles nuisibles qui sont en même temps efficaces pour contrôler les populations de rongeurs cibles nuisibles et qui permettent cependant de limiter les risques d'empoisonnement d'animaux non-cibles -notamment des animaux domestiques, des animaux de compagnie ou des humains- consommant accidentellement un tel appât rodonticide et les risques d'empoisonnement par consommation secondaire d'animaux domestiques (animaux de compagnie ou d'élevage) ou sauvages -par exemple des renards ou des oiseaux- prédateurs de rongeurs cibles nuisibles ayant consommé de l'appât rodonticide ou charognards de rongeurs cibles nuisibles morts empoisonnés.

L'invention vise aussi à proposer une composition comprenant de la diféthialone, un appât rodonticide comprenant une telle composition et un procédé de lutte contre des rongeurs cibles nuisibles dont la mise en oeuvre est en accord avec les règles de bon usage -notamment vis à vis de la protection des oiseaux, et en particulier des rapaces-.

L'invention vise aussi une composition comprenant de la diféthialone, un appât rodonticide comprenant une telle composition et un procédé de lutte contre des rongeurs cibles nuisibles qui ne nécessitent que de faibles doses de diféthialone pour contrôler une population de rongeur cibles nuisibles et qui sont respectueux de l'environnement, de la santé humaine et des animaux non cibles -notamment des oiseaux-.

L'invention vise aussi à proposer une composition comprenant de la diféthialone, un appât rodonticide comprenant une telle composition et un procédé de lutte contre des rongeurs cibles nuisibles qui sont susceptibles de pouvoir être utilisés pour lutter contre des rongeurs cibles nuisibles résistants à des appâts connus de lutte contre des rongeurs cibles nuisibles.

L'invention vise aussi à proposer une alternative à des agents rodonticides et des appâts rodonticides connus.

Pour ce faire, l'invention concerne une composition comprenant de la diféthialone, caractérisée en ce qu'elle comprend un stéréo-isomère de configuration de la diféthialone, dit hétéro-stéréo-isomère, de formule 3-(4'-bromobiphenyl-4-yl)-1-(4-hydroxythiocoumarin-3-yl)-1,2,3,4-tétrahydronaphtalène, dans lequel les carbones 1 et 3 du groupement 1,2,3,4-tétrahydronaphtalène sont de configurations absolues distinctes (1R,3S ou 1S,3R), ladite composition comprenant une quantité d'énantiomère dextrogyre dudit hétéro-stéréo-isomère telle que le rapport de cette quantité sur la quantité de la diféthialone dans la composition est inférieur à 10% ;
la quantité de l'énantiomère dextrogyre dudit hétéro-stéréo-isomère de la diféthialone dans la composition étant différente de la quantité d'énantiomère lévogyre dudit hétéro-stéréo-isomère de la diféthialone dans la composition.

Dans tout le texte :

- le terme « diféthialone » désigne le composé 3-(4'-bromobiphenyl-4-yl)-1-(4-hydroxythiocoumarin-3-yl)-1,2,3,4-tétrahydronaphtalène ou 3-[3-[4-(4-bromophényl)phényl]-1-tétralinyl]-2-hydroxy-4-thiochroménone, ou 3-[3-(4'-bromo[1,1'-biphényl]-4-yl)-1,2,3,4-tétrahydro-1-naphthalényl]-4-hydroxy-2H-1-benzothiopyran-2-one, de formule (I) ci-après :

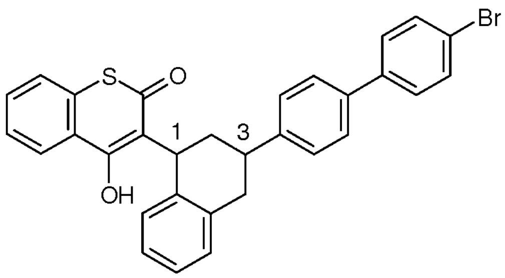

(I) ;

dans laquelle sont présentés les numéros des carbones 1 et 3 du groupement 1,2,3,4-tétrahydronaphtalène ;

- le terme « stéréo-isomères » désigne des isomères de même formule semi-développée, mais dont la position relative des atomes diffère dans l'espace. L'expression « stéréo-isomères de configuration » désigne les stéréo-isomères dont la conversion de l'un en l'autre de ces stéréo-isomères de configuration nécessite une rupture/reformation d'une liaison covalente interatomique. Ainsi, l'expression « stéréo-isomères de configuration » désigne les stéréo-isomères qui ne sont pas des isomères de conformation (ou « rotamères », dont la conversion de l'un en l'autre des isomères de conformation s'accompagne uniquement d'une rotation d'une partie de la molécule selon l'axe d'une liaison $\sigma$ (sigma) formée par recouvrement axial d'orbitales) ;
- le terme « hétéro-stéréo-isomère » de la diféthialone désigne le stéréo-isomère de configuration de la diféthialone de formule 3-(4'-bromobiphenyl-4-yl)-1-(4-hydroxythiocoumarin-3-yl)-1,2,3,4-tétrahydronaphtalène, dans lequel les carbones 1 et 3 du groupement 1,2,3,4-tétrahydronaphtalène dudit hétéro-stéréo-isomère sont de configurations absolues distinctes (1R,3S et 1S,3R), lesdites configurations absolues étant déterminées selon les règles séquentielles de priorité et la nomenclature de Cahn, Ingold et Prelog (CIP) ;
- le terme « homo-stéréo-isomère » de la diféthialone désigne le stéréo-isomère de configuration de la diféthialone de formule 3-(4'-bromobiphenyl-4-yl)-1-(4-hydroxythiocoumarin-3-yl)-1,2,3,4-tétrahydronaphtalène, dans lequel les carbones 1 et 3 du groupement 1,2,3,4-tétrahydronaphtalène dudit homo-stéréo-isomère sont de même configuration absolue (1R,3R et 1S,3S), et ;
- le terme « quantité » s'entend d'une quantité molaire, d'une quantité massique ou d'une quantité volumique. Les proportions sont donc des proportions d'une quantité molaire rapportée à une quantité molaire, d'une quantité massique rapportée à une quantité massique, ou d'une quantité volumique rapportée à une quantité volumique ;
- le terme « sensiblement » indique, de façon habituelle, qu'une caractéristique structurelle ou fonctionnelle ne doit pas être prise comme marquant une discontinuité abrupte, qui n'aurait pas de sens physique, mais couvre non seulement cette structure ou cette fonction, mais également des variations légères de cette structure ou de cette fonction qui produisent, dans le contexte technique considéré, un effet de même nature, sinon de même degré ;
- les expressions « chromatographie liquide à haute pression » ou « chromatographie liquide à haute performance » (« CLHP ») désignent la chromatographie « HPLC » ou « *High Performance Liquid Chromatography* », et ;
- l'expression « temps de rétention » désigne la durée, mesurée au sommet du pic de chromatogramme, pendant laquelle un composé est retenu sur une colonne de chromatographie.

Dans une composition selon l'invention :

- ledit hétéro-stéréo-isomère de la diféthialone est présent sous forme d'une quantité $Q_D$ d'un énantiomère dextrogyre et d'une quantité $Q_L$ d'un énantiomère lévogyre, et ;
- ledit homo-stéréo-isomère de la diféthialone est présent sous forme d'une quantité $Q'_D$ d'un énantiomère dextrogyre et d'une quantité $Q'_L$ d'un énantiomère lévogyre.

Dans cette composition, la proportion :

$$\frac{QD}{QD+QL+Q'D+Q'L}$$

est supérieure ou égale à 0 et inférieure strictement à 10%, avec $Q_L \neq Q_D$.

Une composition selon l'invention comprend une quantité de l'énantiomère dextrogyre dudit hétéro-stéréo-isomère de la diféthialone telle que le rapport de cette quantité sur la quantité de la diféthialone est inférieure à 10%, à l'exclusion d'une composition comprenant :

- une quantité dudit homo-stéréo-isomère de la diféthialone telle que le rapport de cette quantité sur la quantité de diféthialone (totale) dans la composition est compris entre 80% -borne incluse- et 100% -borne incluse-, et ;
- une quantité d'un mélange racémique des énantiomères dudit hétéro-stéréo-isomère de la diféthialone telle que le rapport de cette quantité sur la quantité de diféthialone (totale) dans la composition est compris entre 0% -borne incluse- et 20% -borne exclue-.

Une composition selon l'invention peut être exempte d'énantiomère dextrogyre dudit hétéro-stéréo-isomère de la diféthialone. La composition peut aussi comprendre de l'énantiomère dextrogyre dudit hétéro-stéréo-isomère de la diféthialone à l'état de trace. Une telle composition sensiblement exempte d'énantiomère dextrogyre dudit hétéro-stéréo-isomère de la diféthialone comprend une proportion non nulle d'énantiomère lévogyre dudit hétéro-stéréo-isomère de la diféthialone.

Les inventeurs ont réussi à séparer les énantiomères lévogyre et dextrogyre dudit hétéro-stéréo-isomère de la diféthialone et les énantiomères lévogyre et dextrogyre dudit homo-stéréo-isomère de la diféthialone par chromatographie liquide à haute pression en mode isocratique et dans des conditions particulières en utilisant une colonne de chromatographie comprenant une phase stationnaire chirale. Il n'était en effet pas connu au jour de l'invention de pouvoir séparer les énantiomères lévogyre et dextrogyre dudit homo-stéréo-isomère de la diféthialone et les énantiomères lévogyre et dextrogyre dudit hétéro-stéréo-isomère de la diféthialone.

Ils ont pu réaliser cette séparation en utilisant une colonne HPLC LUX® Cellulose-3 (phenomenex, Le Pecq, France) de dimension 150 x 2 mm et comprenant une phase stationnaire chirale constituée de particules poreuses de cellulose tris(4-méthylbenzoate), d'une granulométrie de 3 μm et d'une porosité de 1000 Å et, à titre de phase mobile, un éluant obtenu par mélange d'acétonitrile (A) et d'eau comprenant de l'acide formique en proportion volumique de 0,1% dans l'eau (B), le rapport volumique A/B étant de 80/20. Le débit de la phase mobile dans la colonne est maintenu à une valeur de 0,25 mL/min et la séparation est réalisée à la température de 23,2°C. La composition à analyser est à une concentration de 1 μg de diféthialone par millilitre d'acétonitrile et le volume injecté sur la colonne est de 1 μL. La détection est effectuée par spectrométrie de masse en tandem (MS/MS) ou par spectrophotométrie en ajustant la concentration en diféthialone et le volume d'injection aux fins d'une détection optimale.

Dans ces conditions, la valeur du temps de rétention ($t_3$) de l'énantiomère dextrogyre dudit hétéro-stéréo-isomère de la diféthialone peut varier selon les conditions opératoires -notamment selon les conditions de température de la colonne- et être comprise entre 11,3 min et 11,8 min. La valeur du temps de rétention ($t_2$) de l'énantiomère lévogyre dudit hétéro-stéréo-isomère de la diféthialone peut varier selon les conditions opératoires -notamment selon les conditions de température de la colonne- et être comprise entre 9,0 min et 9,5 min, de sorte que les énantiomères dextrogyre et lévogyre dudit hétéro-stéréo-isomère peuvent être séparés par chromatographie liquide à haute pression sur une colonne chirale.

La valeur du temps de rétention ($t_1$) de l'énantiomère lévogyre dudit homo-stéréo-isomère peut varier selon les conditions opératoires -notamment selon les conditions de température de la colonne- et être comprise entre 7,8 min et 8,2 min. La valeur du temps de rétention ($t_4$) de l'énantiomère dextrogyre dudit homo-stéréo-isomère selon l'invention peut varier selon les conditions opératoires -notamment selon les conditions de température de la colonne- et être comprise entre 14,0 min et 14,4 min. de sorte que les énantiomères dextrogyre et lévogyre dudit homo-stéréo-isomère peuvent être séparés par chromatographie liquide à haute pression sur une colonne chirale.

Ainsi, dans ces conditions analytiques, l'ordre d'élution des stéréo-isomères de configuration de la diféthialone est tel que $t_1 < t_2 < t_3 < t_4$. Les valeurs des temps de rétention $t_1$, $t_2$, $t_3$ et $t_4$ sont susceptibles de varier, notamment selon les conditions de chromatographie et selon la température de la colonne de chromatographie. Cependant, dans ces conditions de chromatographie, l'ordre d'élution des stéréo-isomères de configuration de la diféthialone reste inchangé.

On mesure la quantité de chaque stéréo-isomère de configuration de la diféthialone à partir d'un chromatogramme en évaluant l'aire sous le pic correspondant à chaque énantiomère et, le cas échéant, en comparant cette mesure d'aire avec les aires obtenues par analyse d'échantillons comprenant des quantités connues de stéréo-isomères de configuration de la diféthialone.

Pouvoir rotatoire des stéréo-isomères de configuration

On mesure le pouvoir rotatoire de chacun des stéréo-isomères de configuration de la diféthialone en solution dans le chloroforme ($CHC\ell_3$) au moyen d'un polarimètre digital P 2000 (JASCO, Bouguenais, France) opérant avec une lumière excitatrice de longueur d'onde de 589 nm.

Le pouvoir rotatoire moyen $\alpha$ (calculé sur deux séries de dix mesures) d'une solution d'énantiomère dextrogyre dudit homo-stéréo-isomère de la diféthialone à 11,6 g/L dans le chloroforme est de 2,308°. Le pouvoir rotatoire spécifique à 25°C $[\alpha]^{25°C}_{589nm}$ de l'énantiomère dextrogyre dudit homo-stéréo-isomère de la diféthialone, mesuré sur la raie D du sodium (589 nm) est de +19,9°.

Le pouvoir rotatoire moyen $\alpha$ (calculé sur deux séries de dix mesures) d'une solution d'énantiomère lévogyre

dudit homo-stéréo-isomère de la diféthialone à 11,05 g/L dans le chloroforme est de -1,635°. Le pouvoir rotatoire spécifique à 25°C $[\alpha]^{25°C}{}_{589nm}$ de l'énantiomère lévogyre dudit homo-stéréo-isomère de la diféthialone, mesuré sur la raie D du sodium (589 nm) est de -14,8°.

Le pouvoir rotatoire moyen $\alpha$ (calculé sur deux séries de dix mesures) d'une solution d'énantiomère dextrogyre dudit hétéro-stéréo-isomère de la diféthialone à 6,3 g/L dans le chloroforme est de +0,573°. Le pouvoir rotatoire spécifique à 25°C $[\alpha]^{25°C}{}_{589nm}$ de l'énantiomère dextrogyre dudit hétéro-stéréo-isomère de la diféthialone, mesuré sur la raie D du sodium (589 nm) est de +9,1°.

Le pouvoir rotatoire moyen $\alpha$ (calculé sur deux séries de dix mesures) d'une solution d'énantiomère lévogyre dudit hétéro-stéréo-isomère de la diféthialone à 6,3 g/L dans le chloroforme est de -0,904°. Le pouvoir rotatoire spécifique à 25°C $[\alpha]^{25°C}{}_{589nm}$ de l'énantiomère lévogyre dudit hétéro-stéréo-isomère de la diféthialone, mesuré sur la raie D du sodium (589 nm) est de -13°.

<u>Dichroïsme circulaire des stéréo-isomères de configuration</u>

L'énantiomère dextrogyre dudit homo-stéréo-isomère de la diféthialone en solution dans le méthanol à une concentration de 0,96 g/L et placé dans une cuve en quartz pour spectrophotomètre, présente un spectre de dichroïsme circulaire réalisé à 25°C de valeurs de dichroïsme circulaire positives entre 220 nm et 300 nm.

L'énantiomère lévogyre dudit homo-stéréo-isomère de la diféthialone en solution dans le méthanol à une concentration de 0,81 g/L et placé dans une cuve en quartz pour spectrophotomètre, présente un spectre de dichroïsme circulaire réalisé à 25°C de valeurs de dichroïsme circulaire négatives entre 220 nm et 300 nm.

L'énantiomère dextrogyre dudit hétéro-stéréo-isomère de la diféthialone en solution dans du méthanol ($CH_3OH$) à une concentration de 0,65 g/L et placé dans une cuve en quartz pour spectrophotomètre, présente un spectre de dichroïsme circulaire réalisé à 25°C de valeurs de dichroïsme circulaire positives entre 210 nm et 250 nm et entre 270 nm et 300 nm.

L'énantiomère lévogyre dudit hétéro-stéréo-isomère de la diféthialone en solution dans le méthanol à une concentration de 0,94 g/L et placé dans une cuve en quartz pour spectrophotomètre, présente un spectre de dichroïsme circulaire réalisé à 25°C de valeurs de dichroïsme circulaire négatives entre 225 nm et 250 nm.

<u>Résonnance magnétique nucléaire du proton</u>

Ledit homo-stéréo-isomère de la diféthialone présente en spectroscopie par résonnance magnétique nucléaire ($^1$H-RMN) du proton à 300 MHz dans $CDC\ell_3$ un multiplet présentant un déplacement chimique ($\delta$) compris entre 4,9 ppm et 5,1 ppm correspondant au carbone 1 du groupement 1,2,3,4-tétrahydronaphtalène dudit homo-stéréo-isomère de la diféthialone. Les énantiomères lévogyre et dextrogyre dudit homo-stéréo-isomère de la diféthialone ne sont pas distinguables par RMN du proton.

Ledit hétéro-stéréo-isomère de la diféthialone présente en spectroscopie par résonnance magnétique nucléaire ($^1$H-RMN) du proton à 300 MHz dans $CDC\ell_3$ un multiplet présentant un déplacement chimique ($\delta$) de l'ordre de 5,3 ppm correspondant au carbone 1 du groupement 1,2,3,4-tétrahydronaphtalène dudit homo-stéréo-isomère de la diféthialone. Les énantiomères lévogyre et dextrogyre dudit hétéro-stéréo-isomère de la diféthialone ne sont pas distinguables par RMN du proton.

Les inventeurs qui sont parvenus à séparer les stéréo-isomères de configuration de la diféthialone, ont observé de façon totalement surprenante que les stéréo-isomères de configuration de la diféthialone ne présentent pas la même rémanence hépatique chez des rongeurs cibles nuisibles et que l'énantiomère dextrogyre dudit hétéro-stéréo-isomère de la diféthialone présente une rémanence hépatique chez des rongeurs cibles nuisibles plus élevée que celle de l'énantiomère lévogyre dudit hétéro-stéréo-isomère de la diféthialone et plus élevée que celle des énantiomères dextrogyre et lévogyre dudit homo-stéréo-isomère de la diféthialone.

L'énantiomère dextrogyre dudit hétéro-stéréo-isomère de la diféthialone persiste dans le foie de rongeurs cibles nuisibles plus longtemps que les autres énantiomères de sorte qu'un rongeur cible nuisible mort ou vif ayant ingéré l'énantiomère dextrogyre dudit hétéro-stéréo-isomère de la diféthialone constitue une proie toxique (un poison) pour des mammifères non-rongeurs et d'oiseaux consommant ledit rongeur cible nuisible -mort ou vif- et en particulier pour des prédateurs (notamment des mammifères non-rongeurs et des oiseaux) qui consomment préférentiellement les viscères de leurs proies et en particulier le foie de leurs proies.

Les inventeurs ont aussi observé qu'une composition et un appât rodonticide selon l'invention présentant une quantité d'énantiomère dextrogyre dudit hétéro-stéréo-isomère de la diféthialone réduite et telle que le rapport de cette quantité sur la quantité de diféthialone est inférieur à 10% -ledit énantiomère dextrogyre dudit hétéro-stéréo-isomère de la diféthialone étant l'énantiomère de plus forte rémanence hépatique- permet en fait, et ce de façon totalement surprenante, de lutter efficacement contre des rongeurs cibles nuisibles.

L'invention concerne donc une composition et un appât rodonticide comprenant de la diféthialone dans laquelle

la quantité du stéréo-isomère de configuration de la diféthialone de plus forte rémanence hépatique chez des rongeurs cibles nuisibles est telle que le rapport de cette quantité sur la quantité de diféthialone est inférieur à 10%.

Avantageusement et selon l'invention, la composition comprend une quantité d'énantiomère dextrogyre dudit hétéro-stéréo-isomère telle que le rapport de cette quantité d'énantiomère dextrogyre dudit hétéro-stéréo-isomère sur la quantité (totale) de la diféthialone est inférieur à 9%, notamment inférieur à 7%, de préférence inférieur à 5%, plus préférentiellement inférieur à 4%, encore plus préférentiellement inférieur à 3%. Avantageusement et selon l'invention, la composition peut comprendre une quantité d'énantiomère dextrogyre dudit hétéro-stéréo-isomère telle que le rapport de cette quantité d'énantiomère dextrogyre dudit hétéro-stéréo-isomère sur la quantité totale de la diféthialone est inférieur à 2%, en particulier inférieur à 1%.

Avantageusement et en variante selon l'invention, la composition peut comprendre une quantité d'énantiomère lévogyre d'un stéréo-isomère de configuration de la diféthialone, dit homo-stéréo-isomère, de formule 3-(4'-bromobiphenyl-4-yl)-1-(4-hydroxythiocoumarin-3-yl)-1,2,3,4-tétrahydronaphtalène, dans lequel les carbones 1 et 3 du groupement 1,2,3,4-tétrahydronaphtalène sont de même configuration absolue (1S,3S ou 1R,3R), la quantité dudit énantiomère lévogyre dudit homo-stéréo-isomère dans la composition étant telle que le rapport de cette quantité sur la quantité totale de la diféthialone dans la composition est inférieur à 10%.

Les inventeurs qui sont parvenus à séparer les stéréo-isomères de configuration de la diféthialone ont aussi déterminé que l'énantiomère lévogyre dudit homo-stéréo-isomère de la diféthialone est en fait l'énantiomère de l'homo-stéréo-isomère de la diféthialone qui présente la plus forte rémanence hépatique chez des rongeurs cibles nuisibles. Ils ont aussi observé que l'énantiomère lévogyre dudit homo-stéréo-isomère de la diféthialone est le plus rémanent dans le foie de rongeurs cibles nuisible parmi les énantiomères dudit homo-stéréo-isomère de la diféthialone et l'énantiomère lévogyre dudit hétéro-stéréo-isomère de la diféthialone.

Avantageusement et selon cette variante de l'invention, la composition peut comprendre une quantité d'énantiomère lévogyre dudit homo-stéréo-isomère telle que le rapport de cette quantité d'énantiomère lévogyre dudit homo-stéréo-isomère sur la quantité totale de la diféthialone est inférieur à 9%, notamment inférieur à 7%, de préférence inférieur à 5%, plus préférentiellement inférieur à 4%, encore plus préférentiellement inférieur à 3%. Avantageusement et selon l'invention, la composition comprend une quantité d'énantiomère lévogyre dudit homo-stéréo-isomère telle que le rapport de cette quantité d'énantiomère lévogyre dudit homo-stéréo-isomère sur la quantité totale de la diféthialone est inférieur à 2%, en particulier inférieur à 1%. La composition peut aussi être exempte d'énantiomère lévogyre dudit homo-stéréo-isomère de la diféthialone. La composition peut aussi comprendre de l'énantiomère lévogyre dudit homo-stéréo-isomère de la diféthialone à l'état de trace dans la composition.

Avantageusement et dans une autre variante selon l'invention, la composition peut comprendre une quantité d'énantiomère lévogyre d'un stéréo-isomère de configuration de la diféthialone, dit homo-stéréo-isomère, de formule 3-(4'-bromobiphenyl-4-yl)-1-(4-hydroxythiocoumarin-3-yl)-1,2,3,4-tétrahydronaphtalène, dans lequel les carbones 1 et 3 du groupement 1,2,3,4-tétrahydronaphtalène sont de même configuration absolue (1S,3S ou 1R,3R), la quantité dudit homo-stéréo-isomère étant telle que le rapport de cette quantité sur la quantité totale de la diféthialone dans la composition est compris entre 10% (borne incluse) et 100% (borne incluse), notamment compris entre 30% et 100%, en particulier compris entre 90% et 100%.

Avantageusement et en variante selon l'invention, la composition peut aussi comprendre une quantité d'énantiomère lévogyre dudit hétéro-stéréo-isomère de la diféthialone dans la composition telle que le rapport de cette quantité sur la quantité totale de la diféthialone dans la composition est inférieur à 10%.

Les inventeurs qui sont parvenus à séparer les stéréo-isomères de configuration de la diféthialone et qui ont observé que les stéréo-isomères de configuration de la diféthialone ne présentent pas la même rémanence hépatique chez des rongeurs cibles nuisibles, ont aussi déterminé que l'énantiomère lévogyre dudit hétéro-stéréo-isomère de la diféthialone est en fait l'énantiomère le plus rémanent dans le foie de rongeurs cibles nuisible parmi l'énantiomère lévogyre dudit hétéro-stéréo-isomère de la diféthialone et l'énantiomère dextrogyre dudit hétéro-stéréo-isomère de la diféthialone.

Avantageusement et selon cette variante de l'invention, la composition peut comprendre une quantité d'énantiomère lévogyre dudit hétéro-stéréo-isomère telle que le rapport de cette quantité d'énantiomère lévogyre dudit hétéro-stéréo-isomère sur la quantité totale de la diféthialone est inférieur à 9%, notamment inférieur à 7%, de préférence inférieur à 5%, plus préférentiellement inférieur à 4%, encore plus préférentiellement inférieur à 3%. Avantageusement et selon l'invention, la composition comprend une quantité d'énantiomère lévogyre dudit hétéro-stéréo-isomère telle que le rapport de cette quantité d'énantiomère lévogyre dudit hétéro-stéréo-isomère sur la quantité totale de la diféthialone est inférieur à 2%, en particulier inférieur à 1%. La composition peut aussi être exempte d'énantiomère lévogyre dudit hétéro-stéréo-isomère de la diféthialone, c'est-à-dire que l'énantiomère lévogyre dudit hétéro-stéréo-isomère de la diféthialone peut être présent dans la composition mais uniquement à l'état de traces.

Avantageusement et selon une autre variante de l'invention, la composition peut comprendre une quantité de l'énantiomère lévogyre dudit hétéro-stéréo-isomère de la diféthialone telle que le rapport de cette quantité sur la quantité totale de la diféthialone est compris entre 10% (borne incluse) et 100% (borne incluse), notamment compris entre 30%

et 100%, en particulier compris entre 90% et 100%.

Avantageusement et en variante selon l'invention, la composition peut comprendre une quantité d'énantiomère dextrogyre dudit homo-stéréo-isomère de la diféthialone telle que le rapport de cette quantité sur la quantité totale de la diféthialone dans la composition est inférieur à 10%.

Rien n'empêche cependant que, avantageusement et en variante selon l'invention, la composition puisse comprendre une quantité d'énantiomère dextrogyre dudit homo-stéréo-isomère de la diféthialone telle que le rapport de cette quantité sur la quantité totale de la diféthialone dans la composition est compris entre 10% (borne incluse) et 100% (borne incluse), notamment compris entre 30% et 100%, en particulier compris entre 90% et 100%.

Avantageusement et selon l'invention, la composition est à l'état liquide et comprend un solvant liquide de la diféthialone. Il peut aussi s'agir d'une suspension ou d'une émulsion de diféthialone dans un milieu liquide.

L'invention concerne aussi l'utilisation d'une composition selon l'invention pour la préparation d'un appât rodonticide pour des rongeurs cibles nuisibles.

L'invention concerne aussi un appât rodonticide comprenant une composition selon l'invention, et au moins un excipient comestible pour des rongeurs cibles nuisibles.

L'invention concerne donc un appât rodonticide comprenant de la diféthialone et au moins un excipient comestible pour des rongeurs cibles nuisibles, caractérisé en ce qu'il comprend un stéréo-isomère de configuration de la diféthialone, dit hétéro-stéréo-isomère, de formule 3-(4'-bromobiphenyl-4-yl)-1-(4-hydroxythiocoumarin-3-yl)-1,2,3,4-tétrahydronaphtalène, dans lequel les carbones 1 et 3 du groupement 1,2,3,4-tétrahydronaphtalène sont de configurations absolues distinctes (1R,3S ou 1S,3R), l'appât rodonticide comprenant une quantité d'énantiomère dextrogyre dudit hétéro-stéréo-isomère telle que le rapport de cette quantité sur la quantité de la diféthialone dans l'appât rodonticide est inférieur à 10% ;

la quantité d'énantiomère dextrogyre dudit hétéro-stéréo-isomère de la diféthialone dans l'appât rodonticide étant différente de la quantité d'énantiomère lévogyre dudit hétéro-stéréo-isomère de la diféthialone dans l'appât rodonticide.

Avantageusement, un appât rodonticide selon l'invention comprend une quantité d'énantiomère dextrogyre dudit hétéro-stéréo-isomère telle que le rapport de cette quantité sur la quantité totale de la diféthialone dans l'appât rodonticide est inférieur à 10% et à l'exclusion d'un mélange racémique des énantiomères dextrogyre et lévogyre dudit hétéro-stéréo-isomère de la diféthialone.

Avantageusement et en variante selon l'invention, l'appât rodonticide comprend un stéréo-isomère de configuration de la diféthialone, dit homo-stéréo-isomère, de formule 3-(4'-bromobiphenyl-4-yl)-1-(4-hydroxythiocoumarin-3-yl)-1,2,3,4-tétrahydronaphtalène, dans lequel les carbones 1 et 3 du groupement 1,2,3,4-tétrahydronaphtalène sont de même configuration absolue (1S,3S ou 1R,3R), l'appât rodonticide comprenant une quantité d'un énantiomère lévogyre dudit homo-stéréo-isomère de la diféthialone telle que le rapport de la quantité d'énantiomère lévogyre dudit homo-stéréo-isomère de la diféthialone sur la quantité totale de la diféthialone dans l'appât rodonticide est inférieur à 10%.

Avantageusement et en variante selon l'invention, un appât rodonticide comprenant de la diféthialone selon l'invention comprend :

- un excipient comestible pour des rongeurs cibles nuisibles, et ;
- une quantité de l'énantiomère dextrogyre dudit hétéro-stéréo-isomère telle que le rapport de cette quantité sur la quantité totale de la diféthialone dans l'appât rodonticide est inférieur à 10%, et ;
- une quantité de l'énantiomère lévogyre dudit homo-stéréo-isomère telle que le rapport de la quantité d'énantiomère lévogyre dudit homo-stéréo-isomère sur la quantité totale de la diféthialone est inférieur à 10%.

Avantageusement et selon l'invention, l'appât rodonticide comprend une quantité d'un énantiomère lévogyre dudit hétéro-stéréo-isomère de la diféthialone telle que le rapport de la quantité de l'énantiomère lévogyre dudit hétéro-stéréo-isomère de la diféthialone dans l'appât rodonticide sur la quantité totale de la diféthialone dans l'appât rodonticide est inférieur à 10%.

Avantageusement et en variante, un appât rodonticide selon l'invention comprend :

- un excipient comestible pour des rongeurs cibles nuisibles, et ;
- une quantité de l'énantiomère dextrogyre dudit hétéro-stéréo-isomère telle que le rapport de cette quantité sur la quantité de la diféthialone dans l'appât rodonticide est inférieur à 10%, et ;
- une quantité de l'énantiomère lévogyre dudit homo-stéréo-isomère telle que le rapport de la quantité d'énantiomère lévogyre dudit homo-stéréo-isomère sur la quantité de la diféthialone dans l'appât rodonticide est inférieur à 10%, et ;
- une quantité de l'énantiomère lévogyre dudit hétéro-stéréo-isomère de la diféthialone telle que le rapport de cette quantité d'énantiomère lévogyre dudit hétéro-stéréo-isomère de la diféthialone sur la quantité de la diféthialone dans l'appât rodonticide est inférieur à 10%.

Avantageusement et selon l'invention, l'appât rodonticide comprend une quantité massique de diféthialone

telle que le rapport (proportion massique) de cette quantité massique de diféthialone sur la quantité massique de l'appât rodonticide est inférieur à 200 ppm -c'est-à-dire inférieur à 200 mg de diféthialone par kilogramme d'appât rodonticide-. Avantageusement, la proportion massique de la diféthialone est comprise entre 1 ppm et 200 ppm (1 mg à 200 mg de diféthialone par kilogramme d'appât rodonticide), notamment comprise entre 1 ppm et 100 ppm (1 mg à 100 mg de diféthialone par kilogramme d'appât rodonticide), de préférence comprise entre 5 ppm et 50 ppm (5 mg à 50 mg de diféthialone par kilogramme d'appât rodonticide), plus préférentiellement comprise entre 5 ppm et 25 ppm (5 mg à 25 mg de diféthialone par kilogramme d'appât rodonticide), encore plus préférentiellement de l'ordre de 15 ppm (15 mg de diféthialone par kilogramme d'appât rodonticide).

Avantageusement et selon l'invention, l'excipient comestible pour des rongeurs cibles nuisibles est choisi pour permettre une consommation de l'appât par des rongeurs cibles nuisibles. Avantageusement et selon l'invention, chaque excipient comestible est non létal pour des rongeurs cibles nuisibles. L'excipient comestible n'est pas rodonticide en lui-même.

Avantageusement et selon l'invention, l'excipient comestible comprend au moins un aliment choisi dans le groupe formé des graines de céréale -notamment des graines de céréale décortiquées-, des moutures de graines de céréale, des farines de graines de céréale, des flocons de graines de céréale, du son de céréales et des graines non céréalières, par exemple des graines de luzerne -notamment sous forme décortiquée, sous forme de mouture, sous forme de farine, sous forme de flocons ou de son-. L'excipient comestible peut comprendre tout support susceptible d'être consommé par des rongeurs cibles nuisibles.

Avantageusement, l'excipient comestible comprend au moins un aliment choisi dans le groupe formé des aliments d'origine végétale et des aliments d'origine animale. Avantageusement, l'excipient comestible comprend au moins un aliment choisi pour stimuler l'appétit des rongeurs cibles nuisibles. En particulier, cet aliment est choisi dans le groupe formé de graines d'une ou de plusieurs céréales, de graines décortiquées d'une ou de plusieurs céréales, des moutures de graines d'une ou de plusieurs céréales, des flocons de graines d'une ou de plusieurs céréales, du son d'une ou de plusieurs céréales et des farines de graines d'une ou de plusieurs céréales. À titre d'exemple, on choisit les céréales dans le groupe formé de l'avoine, du blé, de l'orge, du maïs, du soja et du riz.

Avantageusement, l'aliment est choisi dans le groupe formé des aliments sucrés. Par exemple, il peut s'agir d'aliments comprenant au moins un sucre choisi dans le groupe formé du saccharose, du lactose, du fructose et du glucose. Il peut s'agir d'un sirop de sucre -par exemple, d'un sirop de sucre obtenu par hydrolyse de l'amidon- ou d'un sirop de sucre obtenu par hydrolyse de saccharose (sirop de sucre inverti), ou d'un sirop de sucre de betterave, ou d'un sirop d'érable ou d'un sirop de canne à sucre, ou d'un sirop obtenu à partir d'une plante du genre *stevia.*

Avantageusement, l'aliment est choisi dans le groupe formé des flocons et de la farine de l'albumen de noix de coco (coprah). Avantageusement, l'aliment est choisi dans le groupe formé des noix, des noisettes et des amandes -râpées et/ou en poudre-.

Avantageusement, l'aliment est choisi dans le groupe formé des graisses végétales, des huiles végétales (par exemple huile de colza, graisse de soja, huile de tournesol, beurre de cacao, huile d'arachides, beurre d'arachides, huile de maïs, huile de palme), des graisses animales et des huiles animales (beurre, saindoux, huile de poisson).

Avantageusement, l'aliment est choisi dans le groupe formé des protéines d'origine végétale et des protéines d'origine animale. À titre d'exemple, on peut citer par exemple le lait en poudre -notamment le lait écrémé en poudre-, les oeufs -notamment les oeufs en poudre-, les hydrolysats de protéines d'origine animale et les hydrolysats de protéines d'origine végétale.

Avantageusement et selon l'invention, l'appât rodonticide est choisi dans le groupe formé des appâts solides comprenant de la diféthialone et un excipient comestible solide. Avantageusement, l'appât rodonticide est un solide à l'état divisé, par exemple sous forme de boulettes ou de granulés. Avantageusement, l'appât rodonticide peut être un solide sous forme de bloc ou de pâte susceptibles d'être consommés par les rongeurs cibles nuisibles ou d'un matériau solide susceptible d'être rongé par les rongeurs cibles nuisibles. Avantageusement, l'appât rodonticide solide selon l'invention peut se présenter sous forme d'un bloc rigide, d'un bloc semi-rigide, d'une mousse, d'une poudre ou d'un gel.

Avantageusement, l'appât rodonticide se présentant sous forme d'une poudre, sous forme d'une mousse ou sous forme d'un gel est adapté pour pouvoir souiller la fourrure du(de) rongeur(s) cible(s) nuisible(s) et pour pouvoir être ingérée par celui(ceux)-ci lors de son(leur) toilettage.

Avantageusement et selon l'invention, l'appât rodonticide est choisi dans le groupe formé des appâts liquides comprenant de la diféthialone et un excipient comestible liquide. L'appât rodonticide est alors une boisson pour des rongeurs cibles nuisibles. Il peut s'agir d'une suspension de diféthialone à l'état solide dans un excipient comestible liquide ou d'une émulsion de diféthialone dans un milieu liquide.

Avantageusement, l'appât rodonticide comprend au moins un colorant. Un tel colorant permet en particulier de donner audit appât rodonticide une couleur aisément détectable et identifiable par une personne manipulant l'appât rodonticide.

Avantageusement, l'appât rodonticide comprend au moins un conservateur apte à assurer sa conservation lors de son stockage. Avantageusement, l'appât rodonticide comprend au moins un composé amérisant de type benzoate

de dénatonium, aussi connu sous le nom de « Bitrex® » destiné à réduire les risques de consommation accidentelle par des organismes non cibles.

Avantageusement, dans une variante particulière, la composition et l'appât rodonticide selon l'invention comprennent exclusivement de la diféthialone à titre de substance rodonticide. En particulier, la composition et l'appât rodonticide selon l'invention sont exempts de toute autre substance anticoagulante à usage rodonticide. Cependant, dans cette variante selon l'invention, la composition et l'appât rodonticide peuvent comprendre toute substance antinuisible autre qu'un rodonticide, telle qu'une substance insecticide et/ou acaricide.

Avantageusement, dans une autre variante particulière, la composition et l'appât rodonticide selon l'invention comprennent de la diféthialone et au moins une autre substance distincte de la diféthialone à titre de substance rodonticide. Cette autre substance rodonticide distincte de la diféthialone peut être une autre substance anticoagulante -notamment du type anti-vitamine K ou non- ou une autre substance rodonticide non anticoagulante.

L'invention concerne aussi un procédé de lutte contre des rongeurs cibles nuisibles dans lequel on dissémine une quantité d'appât rodonticide selon l'invention.

L'invention concerne donc un procédé de lutte contre des rongeurs cibles nuisibles dans lequel on dissémine une quantité d'appât rodonticide comprenant de la diféthialone, et :

- au moins un excipient comestible pour des rongeurs cibles nuisibles, et ;
- un stéréo-isomère de configuration de la diféthialone, dit hétéro-stéréo-isomère, de formule 3-(4'-bromobiphenyl-4-yl)-1-(4-hydroxythiocoumarin-3-yl)-1,2,3,4-tétrahydronaphtalène, dans lequel les carbones 1 et 3 du groupement 1,2,3,4-tétrahydronaphtalène sont de configurations absolues distinctes (1R,3S ou 1S,3R), l'appât rodonticide comprenant une quantité d'un énantiomère dextrogyre dudit hétéro-stéréo-isomère telle que le rapport de cette quantité sur la quantité de la diféthialone dans l'appât rodonticide est inférieur à 10% ;

la quantité de l'énantiomère dextrogyre dudit hétéro-stéréo-isomère de la diféthialone dans l'appât rodonticide étant différente de la quantité d'énantiomère lévogyre dudit hétéro-stéréo-isomère de la diféthialone dans l'appât rodonticide.

L'invention concerne aussi un procédé de lutte contre des rongeurs cibles nuisibles dans lequel on dissémine une quantité d'appât rodonticide selon l'invention comprenant une quantité de l'énantiomère dextrogyre dudit hétéro-stéréo-isomère de la diféthialone en proportion inférieure à 10% par rapport à la quantité de la diféthialone, la quantité d'appât étant suffisante pour être rodonticide.

On dissémine donc une quantité d'appât rodonticide comprenant de la diféthialone, présentant une rémanence dans le foie de rongeurs cibles nuisibles diminuée par rapport à la rémanence hépatique de la diféthialone mais une efficacité rodonticide suffisante pour lutter contre des rongeurs cibles nuisibles. Le procédé selon l'invention permet donc de limiter l'empoisonnement secondaire de mammifères non-rongeurs et d'oiseaux susceptibles de consommer préférentiellement les viscères -en particulier le foie- desdits rongeurs morts ou vifs empoisonnés mais comprenant une quantité réduite -et notamment une quantité non létale- de diféthialone.

Avantageusement et en variante selon l'invention, on choisit en combinaison :

- l'excipient comestible ;
- une proportion de chacun des stéréo-isomères de configuration de la diféthialone par rapport à la diféthialone, et ;
- une proportion massique de la diféthialone par rapport à l'appât rodonticide, et ;
- une quantité d'appât disséminé ;

de façon que des rongeurs cibles nuisibles consomment une quantité de diféthialone suffisante pour être létale pour lesdits rongeurs cibles nuisibles consommant dudit appât au cours d'une période unique de 24 heures consécutives.

Un appât rodonticide selon cette variante de l'invention est un appât mortel en une seule prise ou « *one-shot* » en anglais. Avantageusement et selon cette variante de l'invention, la proportion massique de diféthialone dans l'appât rodonticide est comprise entre 5 et 200 ppm, notamment comprise entre 5 ppm et 100 ppm, de préférence comprise entre 5 ppm et 50 ppm, plus préférentiellement comprise entre 15 ppm et 50 ppm.

Avantageusement et dans une autre variante selon l'invention, on choisit en combinaison :

- l'excipient comestible ;
- une proportion de chacun des stéréo-isomères de configuration de la diféthialone par rapport à la diféthialone, et ;
- une proportion massique de diféthialone par rapport à l'appât rodonticide ;

de façon que des rongeurs cibles nuisibles consomment une quantité de diféthialone ;

o non létale pour des rongeurs cibles nuisibles, c'est-à-dire généralement non létale pour les rongeurs cibles nuisibles, consommant dudit appât pendant une période unique de 24 heures consécutives, et ;

o suffisante pour être létale pour des rongeurs cibles nuisibles consommant dudit appât pendant plusieurs périodes de 24 heures, lesdites périodes étant consécutives.

Cette autre variante de l'invention vise donc aussi un procédé de lutte contre des rongeurs cibles nuisibles dans lequel on dissémine une quantité d'appât rodonticide létale pour des rongeurs cibles nuisibles consommant durablement cet appât rodonticide et généralement non létale pour les rongeurs ou des animaux non cibles consommant accidentellement cet appât rodonticide. On parle alors d'un procédé de lutte « multi-doses » ou, en anglais, *« multi-feeding »*. Dans un tel procédé selon l'invention, la consommation d'appât rodonticide par un rongeur cible nuisible pendant une durée de 24 heures est insuffisante pour entrainer la mort dudit rongeur, alors qu'une consommation répétée d'appât rodonticide pendant au moins deux jours consécutifs permet d'entrainer la mort du rongeur cible nuisible.

Cette autre variante de l'invention vise donc un procédé de lutte contre une population de rongeurs cibles nuisibles dans lequel on met à disposition des rongeurs cibles nuisibles une quantité d'appât rodonticide susceptible d'être ingérée par les rongeurs cibles nuisibles, la quantité d'appât rodonticide étant suffisante pour tuer des rongeurs cibles nuisibles consommant ledit appât rodonticide pendant plusieurs jours.

Avantageusement, on adapte la quantité d'appât rodonticide disséminé, la proportion massique de diféthialone dans l'appât rodonticide et la proportion de chaque stéréo-isomère de configuration de la diféthialone dans la diféthialone pour que la consommation de l'appât rodonticide soit létale pour des rongeurs cibles nuisibles consommant quotidiennement de l'appât pendant au moins 2 périodes de 24 heures - notamment de 3 à 7 périodes-, lesdites périodes étant consécutives.

Avantageusement et dans cette autre variante selon l'invention la proportion massique de diféthialone est comprise entre 5 ppm et 50 ppm, notamment comprise entre 5 ppm et 30 ppm -notamment de l'ordre de 15 ppm- par rapport à l'appât rodonticide.

Dans un procédé selon l'invention, on met à disposition des rongeurs cibles nuisibles une quantité d'appât rodonticide comprenant de la diféthialone de faible rémanence hépatique chez des rongeurs cibles nuisibles, la quantité d'appât rodonticide étant suffisante pour satisfaire quotidiennement l'appétit des rongeurs cibles nuisibles, ledit appât rodonticide comprenant une quantité de l'énantiomère dextrogyre dudit hétéro-stéréo-isomère de la diféthialone telle que le rapport de cette quantité sur la quantité de la diféthialone soit inférieur à 10%.

Dans un procédé selon l'invention, on adapte la quantité d'appât rodonticide disséminé, la proportion de chaque stéréo-isomère de configuration de la diféthialone par rapport à la diféthialone et la proportion massique de la diféthialone par rapport à l'appât rodonticide de façon à permettre une consommation d'appât rodonticide pendant plusieurs jours par des rongeurs cibles nuisibles, tout en limitant :

- les risques d'intoxication primaire de mammifères et oiseaux non cibles susceptibles de ne consommer qu'occasionnellement et accidentellement un tel appât rodonticide ;
- les risques d'intoxication secondaire, par exemple des prédateurs des rongeurs cibles, susceptibles de consommer des rongeurs -morts ou vifs-cibles ayant ingéré une quantité dudit appât.

L'invention concerne aussi un procédé chromatographique de séparation des stéréo-isomères de configuration de la diféthialone, dans lequel :

- on choisit une colonne pour chromatographie liquide à haute pression de dimensions 150 x 2 mm et comprenant une phase stationnaire chirale constituée de particules de cellulose tris(4-méthylbenzoate), lesdites particules étant d'une taille moyenne de 3 μm et présentant une taille moyenne de pores de 1000 Å ;
- on choisit, à titre de phase mobile liquide, un mélange formé d'acétonitrile (A) et d'eau comprenant 0,1% en volume d'acide formique (B), avec un rapport volumique A/B de 80/20 et avec un débit de la phase mobile liquide dans la colonne de chromatographie de 0,25 mL/min ;
- on réalise une séparation des stéréo-isomères de configuration de la diféthialone à température ambiante lors de laquelle ;
- on introduit en tête de la colonne pour chromatographie une composition liquide comprenant de la diféthialone, puis ;
- on entraîne la composition liquide avec la phase mobile dans la colonne pour chromatographie dans des conditions propres à séparer les stéréo-isomères de configuration de la diféthialone, puis ;
- on collecte au moins une fraction de la phase mobile comprenant un stéréo-isomère de configuration de la diféthialone séparé des autres stéréo-isomère de configuration de la diféthialone distincts du stéréo-isomère de configuration collecté, et ;
- on élimine la phase mobile liquide de ladite fraction collectée de façon à obtenir le stéréo-isomère de configuration de la diféthialone collecté.

L'invention concerne aussi un stéréo-isomère de configuration de la diféthialone isolé obtenu par un procédé

selon l'invention.

L'invention concerne également un stéréo-isomère de configuration de la diféthialone, un procédé d'obtention d'un tel stéréo-isomère de configuration de la diféthialone, une composition et un appât rodonticide comprenant un tel stéréo-isomère de configuration, et un procédé de lutte contre les rongeurs cibles nuisibles caractérisés en combinaison par tout ou partie des caractéristiques mentionnées ci-dessus ou ci-après.

D'autres buts, caractéristiques et avantages de l'invention apparaîtront à la lecture de la description suivante et des exemples donnés à titre uniquement non limitatif et qui se réfèrent aux figures annexées, dans lesquelles :

- la figure 1 est relative à l'énantiomère dextrogyre dudit hétéro-stéréo-isomère de la diféthialone - la figure a1) représente une analyse par chromatographie liquide à haute pression sur une colonne chirale des stéréo-isomères de configuration de la diféthialone (haut) et de l'énantiomère dextrogyre dudit hétéro-stéréo-isomère de la diféthialone (bas) - la figure b1) représente un spectre de dichroïsme circulaire de l'énantiomère dextrogyre dudit hétéro-stéréo-isomère de la diféthialone - la figure c1) est spectre par RMN du proton à 500 MHz de l'énantiomère dextrogyre dudit hétéro-stéréo-isomère de la diféthialone ;

- la figure 2 est relative à l'énantiomère lévogyre dudit hétéro-stéréo-isomère de la diféthialone - la figure a2) représente une analyse par chromatographie liquide à haute pression sur une colonne chirale des stéréo-isomères de configuration de la diféthialone (haut) et de l'énantiomère lévogyre dudit hétéro-stéréo-isomère de la diféthialone (bas) - la figure b2) représente un spectre de dichroïsme circulaire de l'énantiomère lévogyre dudit hétéro-stéréo-isomère de la diféthialone - la figure c2) est spectre par RMN du proton à 500 MHz de l'énantiomère lévogyre dudit hétéro-stéréo-isomère de la diféthialone ;

- la figure 3 est relative à l'énantiomère dextrogyre dudit homo-stéréo-isomère de la diféthialone - la figure a3) représente une analyse par chromatographie liquide à haute pression sur une colonne chirale des stéréo-isomères de configuration de la diféthialone (haut) et de l'énantiomère dextrogyre dudit homo-stéréo-isomère de la diféthialone (bas) - la figure b3) représente un spectre de dichroïsme circulaire de l'énantiomère dextrogyre dudit homo-stéréo-isomère de la diféthialone - la figure c3) est spectre par RMN du proton à 500 MHz de l'énantiomère dextrogyre dudit homo-stéréo-isomère de la diféthialone, et ;

- la figure 4 est relative à l'énantiomère lévogyre dudit homo-stéréo-isomère de la diféthialone - la figure a4) représente une analyse par chromatographie liquide à haute pression sur une colonne chirale des stéréo-isomères de configuration de la diféthialone (haut) et de l'énantiomère lévogyre dudit homo-stéréo-isomère de la diféthialone (bas) - la figure b4) représente un spectre de dichroïsme circulaire de l'énantiomère lévogyre dudit homo-stéréo-isomère de la diféthialone - la figure c4) est spectre par RMN du proton à 500 MHz de l'énantiomère lévogyre dudit homo-stéréo-isomère de la diféthialone.

A. <u>Purification des stéréo-isomères de configuration de la diféthialone</u>

A.1. <u>Identification dudit homo-stéréo-isomère de la diféthialone et dudit hétéro-stéréo-isomère de la diféthialone</u>

On identifie l'homo-stéréo-isomère de la diféthialone par spectroscopie par résonnance magnétique ($^1$H-RMN) du proton. L'homo-stéréo-isomère de la diféthialone en solution dans $CDC\ell_3$ présente un multiplet à un déplacement chimique ($\delta$) compris entre 4,9 ppm et 5,1 ppm et correspondant au proton porté par le carbone 1 du groupement 1,2,3,4-tétrahydronaphtalène de la diféthialone comme illustré aux figures c3) et c4).

On identifie l'hétéro-stéréo-isomère de la diféthialone par son spectre RMN du proton réalisé dans $CDC\ell_3$, sur lequel le déplacement chimique du proton porté par le carbone 1 du groupement 1,2,3,4-tétrahydronaphtalène dudit hétéro-stéréo-isomère de la diféthialone est de l'ordre de 5,3 ppm.

A.2. <u>Séparation des énantiomères lévogyre et dextrogyre dudit homo-stéréo-isomère et dudit hétéro-stéréo-isomère de la diféthialone par chromatographie liquide à haute pression</u>

Les inventeurs ont résolu le problème complexe et non résolu à ce jour de la séparation des énantiomères lévogyre et dextrogyre dudit hétéro-stéréo-isomère de la diféthialone et des énantiomères lévogyre et dextrogyre dudit homo-stéréo-isomère de la diféthialone à partir d'une composition de diféthialone majoritairement sous forme dudit hétéro-stéréo-isomère. Ils sont parvenus à séparer les stéréo-isomères de configuration de la diféthialone par chromatographie liquide à haute pression (haute performance) sur une colonne chirale LUX® Cellulose-3 (phenomenex, Le Pecq, France) de dimension 150 x 2 mm et comprenant une phase stationnaire chirale constituée de particules poreuses de cellulose tris(4-méthylbenzoate), d'une granulométrie de 3 $\mu$m et d'une porosité de 1000 Å et en utilisant, à titre de

phase mobile, un éluant formé d'un mélange d'acétonitrile (A) et d'eau comprenant de l'acide formique en proportion volumique de 0,1% dans l'eau (B) avec un rapport volumique A/B de 80/20. Le débit de la phase mobile dans la colonne est de 0,25 mL/min et la séparation est réalisée à la température de 23,2°C. La solution contenant l'échantillon à analyser est à une concentration de 1 $\mu$g de diféthialone par millilitre d'acétonitrile et est filtrée sur une membrane de cellulose régénérée de seuil de coupure de 0,2 $\mu$m. Le volume injecté sur la colonne est de 1 $\mu$L.

Dans un procédé de séparation des énantiomères dudit homo-stéréo-isomère de la diféthialone, il est possible de détecter lesdits énantiomères en sortie de colonne chromatographie liquide à haute pression par spectrométrie de masse en tandem (MS/MS) en mode d'ionisation négative par électronébulisation (ESI, « *ElectroSpray Ionization* »). La température du gaz nébuliseur est de 350°C et son débit est de 8 L/min. La pression du gaz nébuliseur est portée à 2700 hPa. En particulier, on détecte les transitions MRM (« *Multiple Reaction Monitoring* » m/z 537,1 → 151,0 et m/z 537,1 → 78,9 correspondant aux signaux de la diféthialone.

Les figures al), a2), a3) et a4) illustrent la séparation des stéréo-isomères de configuration de la diféthialone.

Dans ces conditions expérimentales :

- la valeur du temps de rétention ($t_1$) de l'énantiomère lévogyre dudit homo-stéréo-isomère est de l'ordre de 8,1 min, comme représenté figure a4) ;
- la valeur du temps de rétention ($t_2$) de l'énantiomère lévogyre dudit hétéro-stéréo-isomère de la diféthialone est de l'ordre de 9,4 min, comme représenté figure a2) ;
- la valeur du temps de rétention ($t_3$) de l'énantiomère dextrogyre dudit hétéro-stéréo-isomère de la diféthialone est de l'ordre de 11,7 min, comme représenté figure a1) ;
- la valeur du temps de rétention ($t_4$) de l'énantiomère dextrogyre dudit homo-stéréo-isomère selon l'invention est de l'ordre de 14,4 min, comme représenté figure a3) ;

de sorte que les stéréo-isomères de configuration de la diféthialone peuvent être séparés par chromatographie liquide à haute pression sur une colonne chirale. Ainsi, dans ces conditions expérimentales, l'ordre d'élution des stéréo-isomères de configuration de la diféthialone est tel que $t_1 < t_2 < t_3 < t_4$.

Les inventeurs ont en outre observé qu'il est possible de réaliser une purification préparative de chaque énantiomère dudit homo-stéréo-isomère et dudit hétéro-stéréo-isomère de la diféthialone par chromatographie sur colonne préparative de plus grandes dimensions, notamment d'un diamètre de 20 mm, comprenant une phase stationnaire chirale constituée de particules poreuses de cellulose tris(4-méthylbenzoate) d'une granulométrie supérieure à 3 $\mu$m et dans des conditions similaires à celles décrites pour la chromatographie analytique.

Il est possible de mesurer la quantité de chaque stéréo-isomère de configuration de la diféthialone en évaluant l'aire sous le pic du chromatogramme correspondant à chaque stéréo-isomère de configuration et, le cas échéant, en comparant cette mesure d'aire avec les aires obtenues par analyse d'échantillons comprenant des quantités connues de stéréo-isomères de configuration de la diféthialone.

B. Caractérisation structurelle

B.1. Spectroscopie UV

Le spectre UV des énantiomères dextrogyre et lévogyre dudit homo-stéréo-isomère et dudit hétéro-stéréo-isomère de la diféthialone en solution dans le chloroforme présente des pics d'absorbance centrés à 238,2 nm et 259,5 nm.

B.2. Pouvoir rotatoire

Les inventeurs ont caractérisé les énantiomères dextrogyre et lévogyre dudit homo-stéréo-isomère et dudit hétéro-stéréo-isomère de la diféthialone à l'état isolé par leur pouvoir rotatoire (aussi appelé activité optique ou biréfringence circulaire), c'est-à-dire par sa propriété à dévier le plan de polarisation d'une lumière polarisée. Une déviation du plan de polarisation de la lumière polarisée dans le sens horaire de rotation en faisant face au faisceau de lumière polarisée caractérise une solution dextrogyre, et une déviation du plan de polarisation de la lumière polarisée dans le sens antihoraire de rotation en faisant face au faisceau de lumière polarisée caractérise une solution et un composé lévogyre.

On mesure le pouvoir rotatoire d'une solution d'un stéréo-isomère de configuration de la diféthialone dans le chloroforme. On mesure le pouvoir rotatoire de cette solution au moyen d'un polarimètre digital P 2000 (JASCO, Bouguenais, France) opérant avec une lumière excitatrice de longueur d'onde de 589 nm. On calcule le pouvoir rotatoire $\alpha$ moyen obtenu sur deux séries de dix mesures différentes et le pouvoir rotatoire spécifique à 25°C $[\alpha]^{25°C}_{589nm}$ de chaque stéréo-isomère de configuration de la diféthialone en solution dans le chloroforme, mesuré sur la raie D du sodium (589 nm). Les résultats sont donnés au tableau 1 ci-après.

Tableau 1

| | Concentration, g/L | $\alpha$ | $[\alpha]^{25°C}_{589nm}$ |
|---|---|---|---|
| Homo-stéréo-isomère dextrogyre | 11,6 | 2,308° | +19,9° |
| Homo-stéréo-isomère lévogyre | 11,05 | -1,635° | -14,8° |
| Hétéro-stéréo-isomère dextrogyre | 6,3 | +0,573° | +9,1° |
| Hétéro-stéréo-isomère lévogyre | 6,95 | -0,904° | -13° |

B.3. Dichroïsme circulaire

Le spectre de dichroïsme circulaire de chaque énantiomère dextrogyre et lévogyre dudit homo-stéréo-isomère et dudit hétéro-stéréo-isomère de la diféthialone isolé traduit la différence d'absorbance ($\Delta A=A_G-A_D$) des deux ondes de polarisation circulaire gauche (PCG) d'intensité $A_G$ et de polarisation circulaire droite (PCD) d'intensité $A_D$. Il permet de distinguer les énantiomères dextrogyre et lévogyre dudit homo-stéréo-isomère et dudit hétéro-stéréo-isomère de la diféthialone. On mesure cette différence d'absorbance des deux ondes de polarisation circulaire dans un spectromètre de dichroïsme circulaire J-815 (JASCO, Bouguenais, France). On prépare 2 mL de solution de chaque stéréo-isomère de configuration de la diféthialone dans du méthanol à la concentration donnée au tableau 2. On transfère la solution dans une cuvette en quartz pour spectrophotomètre. On mesure à 25°C le spectre de dichroïsme circulaire de la solution entre 163 nm et 900 nm.

Tableau 2

| | Concentration mg/mL | Figure | Dichroïsme circulaire entre 220 nm et 300 nm |
|---|---|---|---|
| Homo-stéréo-isomère dextrogyre | 0,96 | 3b) | positif |
| Homo-stéréo-isomère lévogyre | 0,81 | 4b) | négatif |
| Hétéro-stéréo-isomère dextrogyre | 0,65 | 1b) | positif |
| Hétéro-stéréo-isomère lévogyre | 0,94 | 1c) | négatif |

C. Extraction de la diféthialone de foies de rats traités à la diféthialone en vue de l'analyse des stéréo-isomères de configuration de la diféthialone

C.1. Homogénéisation de l'échantillon de foie

On pèse avec précision de l'ordre de 0,525 g (±0,025 g) de foie de rat que l'on place dans un tube en polypropylène de 50 mL. On ajoute 10 mL d'acétone et on soumet la suspension à une homogénéisation au moyen d'un homogénéisateur/disperseur Ultra-Turrax® pendant une durée de l'ordre de 30 sec. On rince la tige de l'homogénéisateur/disperseur à l'eau chaude puis 2 fois avec 20 mL d'acétone dans un tube en polypropylène. On centrifuge l'homogénat pendant 5 min à une vitesse de centrifugation de 3000 rpm (rotation par minute). On collecte et on transvase le surnageant dans un tube à essai. On soumet l'échantillon à une évaporation sous un flux d'azote ($N_2$) à la température de 40°C de façon à former un extrait sec.

C.2. Élimination des lipides

Dans le tube contenant l'extrait sec, on ajoute 1 mL d'acétonitrile de façon à solubiliser l'extrait sec. On lave la solution d'acétonitrile 2 fois successivement avec 1 mL d'hexane. L'extrait débarrassé des lipides est séché sous un flux d'azote ($N_2$) à la température de 40°C, puis repris avec 0,5 mL de méthanol et solubilisé par agitation sous vortex. On ajoute ensuite 0,5 mL d'eau ultra-pure (Milli-Q). L'échantillon est homogénéisé sous vortex.

C.3. Extraction de la diféthialone sur phase solide (« *SPE, Solid Phase Extraction »)*

On fait passer 1 mL de dichlorométhane, puis 1 mL de méthanol, puis 1 mL d'eau ultra-pure (Milli-Q) sur une cartouche Oasis HLB 1cc (WAT094225, Waters). On dépose ensuite l'extrait de foie débarrassé des lipides (1 mL de

MeOH/$H_2O$ Milli-Q) et contenant la diféthialone en tête de la cartouche de façon que l'extrait de foie pénètre dans la cartouche par gravité au contact de la phase solide. On dépose en tête de cartouche 1 mL de solution de lavage formée de méthanol et d'eau ultra-pure en proportion volumique de 90/10. On sèche la cartouche par aspiration sous vide connectée en partie basse de la cartouche. On dépose ensuite en tête de cartouche 1 mL de solution d'élution formée de dichlorométhane et de méthanol en proportion volumique de 90/10 et on collecte en bas de cartouche un éluat comprenant la diféthialone. On évapore le solvant de l'éluat sous un flux d'azote ($N_2$) à la température de 40°C. On reprend l'échantillon dans 0,5 mL d'acétonitrile et on filtre la solution d'acétonitrile contenant la diféthialone sur filtre 0,2 $\mu$m.

On analyse la composition par chromatographie liquide à haute pression sur une colonne chirale comme décrit au point A2) ci-dessus.

D. Étude de la rémanence hépatique des stéréo-isomères de configuration de la diféthialone chez des rats

On administre par gavage ("*per os*") à des rats (*Rattus norvegicus* mâles et femelles) sensibles au coumafène, âgés de 8 semaines et pesant de l'ordre de 200 g, une solution d'un mélange d'homo-stéréo-isomère (DFN-Homo-SI) et d'hétéro-stéréo-isomère (DFN-Hétéro-SI) de la diféthialone dans un mélange d'huile végétale et de DMSO à 5 %. La proportion molaire d'homo-stéréo-isomère est de 40% et la proportion molaire d'hétéro-stéréo-isomère est de 60%. Chaque stéréo-isomère de configuration de la diféthialone est formé d'un mélange racémique des deux énantiomères dudit stéréo-isomère de configuration correspondant.

À J0, on administre à chaque rat de la solution de gavage de façon que la quantité de diféthialone ingérée par chaque rat soit de l'ordre de 3,4 mg par kilogramme de rat. Pour éviter l'hémorragie, les rats sont aussi traités quotidiennement par administration par voie sous cutanée d'une dose de vitamine K1 (à titre d'antidote vis-à-vis de l'hémorragie) à raison de 0,1U pour 200g de poids de rat vif.

À 4 heures (H+4), 9 heures (H+9), 24 heures (H+24), 120 heures (H+120), 168 heures (H+168) et 216 heures (H+216) après le gavage, on euthanasie 3 rats mâles et 3 rats femelles préalablement anesthésiés à l'isoflurane, on prélève le foie des rats euthanasiés puis on extrait la diféthialone du foie et on dose la quantité de chacun des stéréo-isomères de configuration de la diféthialone, on mesure de l'aire sous les pics du chromatogramme obtenu et on quantifie chaque stéréo-isomère de configuration par comparaison avec une courbe d'étalonnage. On dose :

- l'énantiomère dextrogyre dudit homo-stéréo-isomère (« DFN-Homo-dextro ») ;
- l'énantiomère lévogyre dudit homo-stéréo-isomère (« DFN-Homo-lévo ») ;
- l'énantiomère dextrogyre dudit hétéro-stéréo-isomère (« DFN-Hétéro-dextro »);
- l'énantiomère lévogyre dudit hétéro-stéréo-isomère (« DFN-Hétéro-lévo ») ; présents dans le foie des rats gavés.

Les résultats sont donnés au tableau 3 suivant dans lequel chaque valeur est la moyenne des teneurs mesurées sur 6 rats (3 rats mâles et 3 rats femelles) et exprimée en nano-gramme d'énantiomère par gramme de foie (ng/g)).

Tableau 3

| Délai après gavage, heures | Teneur hépatique, ng/g | | | |
|---|---|---|---|---|
| | Diféthialone totale | | | |
| | DFN-Homo-SI | | DFN-Hétéro-SI | |
| | DFN-Homo-dextro | DFN-Homo-lévo | DFN-Hétéro-dextro | DFN-Hétéro-lévo |
| 4 | 4566 | 5692,5 | 10589,5 | 5380,5 |
| 9 | 4692,5 | 7141 | 12155,5 | 5869,5 |
| 24 | 1243,5 | 4403,5 | 8102 | 3613,5 |
| 48 | 720,5 | 3874 | 7974,5 | 2804 |
| 120 | 192,5 | 2087 | 5431,5 | 1211 |
| 168 | 129 | 878,5 | 3011 | 392,5 |
| 216 | 77,5 | 1224 | 4030,5 | 545 |

L'énantiomère dextrogyre dudit hétéro-stéréo-isomère de la diféthialone est le plus rémanent dans le foie de rongeurs cibles nuisibles.

Appât rodonticide comprenant une proportion massique de 14,7 ppm de diféthialone

On réalise un appât rodonticide pâteux selon l'invention par dispersion d'une quantité d'énantiomère dextrogyre dudit homo-stéréo-isomère de la diféthialone dans un excipent comestible comprenant de la graisse végétale et de la farine de céréale. La proportion mesurée de diféthialone par rapport à l'appât est de 14,7 ppm (14,7 mg de diféthialone par kilogramme d'appât) et la proportion d'énantiomère dextrogyre dudit homo-stéréo-isomère par rapport à la diféthialone est de 99,7%. L'appât comprend en outre une proportion massique de 0,3% d'énantiomère lévogyre dudit hétéro-stéréo-isomère de la diféthialone par rapport à la diféthialone. L'appât rodonticide selon l'invention est sensiblement exempt d'énantiomère dextrogyre dudit hétéro-stéréo-isomère de la diféthialone.

À J0, on place 10 rats Sprague Dawley (SD, 5 rats mâles et 5 rats femelles) sensibles au coumafène dans des cages individuelles avec une alimentation de référence exempte de rodonticide. À J3, on réalise une pesée de chaque rat puis on place à disposition de chaque rat 50 g d'appât rodonticide tel que décrit ci-dessus. On renouvelle quotidiennement cette mise à disposition de 50 g d'appât rodonticide. L'appât consommé par les rats est complété à 50 g d'appât à J4, J5 et J6. À compter de J7, on élimine les appâts rodonticides résiduels et on fournit une alimentation exempte de rodonticide à tous les rats. On prévoit une surveillance des rats pendant 3 semaines.

Les quantités moyennes d'appât consommé quotidiennement par un rat à J4, J5, J6 et J7 exprimées en gramme par jour sont données au tableau 4 ci-après.

Tableau 4

| Appât consommé, g | Moyenne | Écart-type |
|---|---|---|
| J4 | 17,8 | 5,7 |
| J5 | 16,0 | 4,7 |
| J6 | 14,2 | 4,1 |
| J7 | 9,4 | 3,8 |

Il est à noter qu'aucun rat n'a consommé une quantité quotidienne d'appât inférieure à 1 g/jour. Tous les rats (100%) meurent entre J9 et J10. La mortalité est de 100% à J10.

L'appât dosé à 14,7 ppm de diféthialone (dont 99,7% d'énantiomère dextrogyre dudit homo-stéréo-isomère de la diféthialone) permet l'obtention d'un taux de mortalité de 100% tout en minimisant les risques d'intoxication secondaire d'animaux -notamment d'oiseaux- prédateurs ou charognards de rongeurs cibles nuisibles affaiblis ayant consommé un appât rodonticide.

## Revendications

1. Composition comprenant de la diféthialone, **caractérisée en ce qu'**elle comprend un stéréo-isomère de configuration de diféthialone, dit hétéro-stéréo-isomère, de formule 3-(4'-bromobiphenyl-4-yl)-1-(4-hydroxythiocoumarin-3-yl)-1,2,3,4-tétrahydronaphtalène, dans lequel les carbones 1 et 3 du groupement 1,2,3,4-tétrahydronaphtalène sont de configurations absolues distinctes, ladite composition comprenant une quantité d'énantiomère dextrogyre dudit hétéro-stéréo-isomère telle que le rapport de cette quantité sur la quantité de la diféthialone dans la composition est inférieur à 10% ;
   la quantité de l'énantiomère dextrogyre dudit hétéro-stéréo-isomère de la diféthialone dans la composition étant différente de la quantité d'énantiomère lévogyre dudit hétéro-stéréo-isomère de la diféthialone dans la composition.

2. Composition selon la revendication 1, **caractérisée en ce qu'**elle comprend une quantité d'énantiomère lévogyre d'un stéréo-isomère de configuration de la diféthialone, dit homo-stéréo-isomère, de formule 3-(4'-bromobiphenyl-4-yl)-1-(4-hydroxythiocoumarin-3-yl)-1,2,3,4-tétrahydronaphtalène, dans lequel les carbones 1 et 3 du groupement 1,2,3,4-tétrahydronaphtalène sont de même configuration absolue (1S,3S ou 1R,3R), la quantité dudit énantiomère lévogyre dudit homo-stéréo-isomère dans la composition étant telle que le rapport de cette quantité sur la quantité totale de la diféthialone dans la composition est inférieur à 10%.

3. Composition selon l'une des revendications 1 ou 2, **caractérisée en ce qu'**elle comprend une quantité d'énantiomère lévogyre dudit hétéro-stéréo-isomère de la diféthialone dans la composition telle que le rapport de cette quantité sur la quantité totale de la diféthialone dans la composition est inférieur à 10%.

**4.** Composition selon l'une des revendications 2 ou 3, **caractérisée en ce qu'**elle comprend une quantité d'énantiomère dextrogyre dudit homo-stéréo-isomère de la diféthialone telle que le rapport de cette quantité sur la quantité totale de la diféthialone dans la composition est compris entre 10% et 100%.

**5.** Appât rodonticide comprenant de la diféthialone et au moins un excipient comestible pour des rongeurs cibles nuisibles, **caractérisé en ce qu'**il comprend un stéréo-isomère de configuration de diféthialone, dit hétéro-stéréo-isomère, de formule 3-(4'-bromobiphenyl-4-yl)-1-(4-hydroxythiocoumarin-3-yl)-1,2,3,4-tétrahydronaphtalène, dans lequel les carbones 1 et 3 du groupement 1,2,3,4-tétrahydronaphtalène sont de configurations absolues distinctes, l'appât rodonticide comprenant une quantité d'énantiomère dextrogyre dudit hétéro-stéréo-isomère telle que le rapport de cette quantité sur la quantité de la diféthialone dans l'appât rodonticide est inférieur à 10% ;
la quantité de l'énantiomère dextrogyre dudit hétéro-stéréo-isomère de la diféthialone dans l'appât rodonticide étant différente de la quantité d'énantiomère lévogyre dudit hétéro-stéréo-isomère de la diféthialone dans l'appât rodonticide.

**6.** Appât rodonticide selon la revendication 5, **caractérisé en ce qu'**il comprend un stéréo-isomère de configuration de la diféthialone, dit homo-stéréo-isomère, de formule 3-(4'-bromobiphenyl-4-yl)-1-(4-hydroxythiocoumarin-3-yl)-1,2,3,4-tétrahydronaphtalène, dans lequel les carbones 1 et 3 du groupement 1,2,3,4-tétrahydronaphtalène sont de même configuration absolue, l'appât rodonticide comprenant une quantité d'un énantiomère lévogyre dudit homo-stéréo-isomère de la diféthialone telle que le rapport de la quantité d'énantiomère lévogyre dudit homo-stéréo-isomère de la diféthialone sur la quantité totale de la diféthialone dans l'appât rodonticide est inférieur à 10%.

**7.** Appât rodonticide selon l'une des revendications 5 ou 6, **caractérisé en ce qu'**il comprend une quantité d'un énantiomère lévogyre dudit hétéro-stéréo-isomère de la diféthialone telle que le rapport de la quantité de l'énantiomère lévogyre dudit hétéro-stéréo-isomère de la diféthialone dans l'appât rodonticide sur la quantité totale de la diféthialone dans l'appât rodonticide est inférieur à 10%.

**8.** Appât rodonticide selon l'une des revendications 5 à 7, **caractérisé en ce que** l'excipient comestible comprend au moins un aliment choisi dans le groupe formé des graines de céréale, des moutures de graines de céréale, des farines de graines de céréale, des flocons de graines de céréale, du son de céréales et des graines non céréalières.

**9.** Appât rodonticide selon l'une des revendications 5 à 8, **caractérisé en ce qu'**il comprend une quantité massique de diféthialone telle que le rapport de cette quantité massique de diféthialone sur la quantité massique de l'appât rodonticide est inférieur à 200 ppm.

**10.** Procédé de lutte contre des rongeurs cibles nuisibles, dans lequel on dissémine une quantité d'appât rodonticide comprenant de la diféthialone, et

- au moins un excipient comestible pour des rongeurs cibles nuisibles, et ;
- un stéréo-isomère de configuration de la diféthialone, dit hétéro-stéréo-isomère, de formule 3-(4'-bromobiphenyl-4-yl)-1-(4-hydroxythiocoumarin-3-yl)-1,2,3,4-tétrahydronaphtalène, dans lequel les carbones 1 et 3 du groupement 1,2,3,4-tétrahydronaphtalène sont de configurations absolues distinctes, l'appât rodonticide comprenant une quantité d'un énantiomère dextrogyre dudit hétéro-stéréo-isomère telle que le rapport de cette quantité sur la quantité de la diféthialone dans l'appât rodonticide est inférieur à 10% ;

la quantité de l'énantiomère dextrogyre dudit hétéro-stéréo-isomère de la diféthialone dans l'appât rodonticide étant différente de la quantité d'énantiomère lévogyre dudit hétéro-stéréo-isomère de la diféthialone dans l'appât rodonticide.

**11.** Procédé selon la revendication 10, **caractérisé en ce qu'**on choisit en combinaison :

- l'excipient comestible ;
- une proportion de chacun des stéréo-isomères de configuration de la diféthialone par rapport à la diféthialone, et ;
- une proportion massique de diféthialone par rapport à l'appât rodonticide, et ;
- une quantité d'appât disséminé ;

de façon que des rongeurs cibles nuisibles consomment une quantité de diféthialone suffisante pour être létale pour lesdits rongeurs cibles nuisibles consommant dudit appât au cours d'une période unique de 24 heures consécutives.

**12.** Procédé selon la revendication 10, **caractérisé en ce qu'**on choisit en combinaison :

- l'excipient comestible ;
- une proportion de chacun des stéréo-isomères de configuration de la diféthialone par rapport à la diféthialone, et ;
- une proportion massique de diféthialone par rapport à l'appât rodonticide ;

de façon que des rongeurs cibles nuisibles consomment une quantité de diféthialone ;

◦ non létale pour des rongeurs cibles nuisibles consommant dudit appât pendant une période unique de 24 heures consécutives, et ;
◦ suffisante pour être létale pour des rongeurs cibles nuisibles consommant dudit appât pendant plusieurs périodes de 24 heures, lesdites périodes étant consécutives.

**13.** Procédé chromatographique de séparation de stéréo-isomères de configuration de la diféthialone, dans lequel :

- on choisit une colonne pour chromatographie liquide à haute pression de dimensions 150 x 2 mm et comprenant une phase stationnaire chirale constituée de particules de cellulose tris(4-méthylbenzoate), lesdites particules étant d'une taille moyenne de 3 μm et présentant une taille moyenne de pores de 1000 Å ;
- on choisit, à titre de phase mobile liquide, un mélange formé d'acétonitrile (A) et d'eau comprenant 0,1% en volume d'acide formique (B), avec un rapport volumique A/B de 80/20 et avec un débit de la phase mobile liquide dans la colonne de chromatographie de 0,25 mL/min ;
- on réalise une séparation des stéréo-isomères de configuration de la diféthialone à température ambiante lors de laquelle ;
- on introduit en tête de la colonne pour chromatographie une composition liquide comprenant de la diféthialone, puis ;
- on entraîne la composition liquide avec la phase mobile dans la colonne pour chromatographie dans des conditions propres à séparer les stéréo-isomères de configuration de la diféthialone, puis ;
- on collecte au moins une fraction de la phase mobile comprenant un stéréo-isomère de configuration de la diféthialone séparé des autres stéréo-isomère de configuration de la diféthialone distincts du stéréo-isomère de configuration collecté, et ;
- on élimine la phase mobile liquide de ladite fraction collectée de façon à obtenir le stéréo-isomère de configuration de la diféthialone collecté.

## Patentansprüche

**1.** Zusammensetzung, die Difethialon umfasst, **dadurch gekennzeichnet, dass** sie ein als Heterostereoisomer bezeichnetes Difethialon-Konfigurationsstereoisomer der Formel 3-(4'-Brombiphenyl-4-yl)-1-(4-hydroxythiocoumarin-3-yl)-1,2,3,4-tetrahydronaphthalin umfasst, wobei die Kohlenstoffatome 1 und 3 der 1,2,3,4-Tetrahydronaphthalin-Gruppe von verschiedenen absoluten Konfigurationen sind, wobei die Zusammensetzung eine Menge an rechtsdrehendem Enantiomer des Heterostereoisomers derart umfasst, dass das Verhältnis dieser Menge auf die Menge des Difethialons in der Zusammensetzung weniger als 10 % beträgt;
wobei sich die Menge des rechtsdrehenden Enantiomers des Heterostereoisomers des Difethialons in der Zusammensetzung von der Menge an linksdrehendem Enantiomer des Heterostereoisomers des Difethialons in der Zusammensetzung unterscheidet.

**2.** Zusammensetzung nach Anspruch 1, **dadurch gekennzeichnet, dass** sie eine Menge an linksdrehendem Enantiomer eines als Homostereoisomer bezeichneten Konfigurationsstereoisomers des Difethialons der Formel 3-(4'-Brombiphenyl-4-yl)-1-(4-hydroxythiocoumarin-3-yl)-1,2,3,4-tetrahydronaphthalin umfasst, wobei die Kohlenstoffatome 1 und 3 der 1,2,3,4-Tetrahydronaphthalin-Gruppe von derselben absoluten Konfiguration (1S,3S oder 1R,3R) sind, wobei die Menge des linksdrehenden Enantiomers des Homostereoisomers in der Zusammensetzung derart ist, dass das Verhältnis dieser Menge auf die Gesamtmenge des Difethialons in der Zusammensetzung weniger als 10 % beträgt.

**3.** Zusammensetzung nach einem der Ansprüche 1 oder 2, **dadurch gekennzeichnet, dass** sie eine Menge an linksdrehendem Enantiomer des Heterostereoisomers des Difethialons in der Zusammensetzung derart umfasst, dass das Verhältnis dieser Menge auf die Gesamtmenge des Difethialons in der Zusammensetzung weniger als

10 % beträgt.

4. Zusammensetzung nach einem der Ansprüche 2 oder 3, **dadurch gekennzeichnet, dass** sie eine Menge an rechtsdrehendem Enantiomer des Homostereoisomers des Difethialons derart umfasst, dass das Verhältnis dieser Menge auf die Gesamtmenge des Difethialons in der Zusammensetzung zwischen 10 % und 100 % beträgt.

5. Rodentizider Köder, der Difethialon und mindestens einen für Ziel-Schadnager genießbaren Hilfsstoff umfasst, **dadurch gekennzeichnet, dass** er ein als Heterostereoisomer bezeichnetes Difethialon-Konfigurationsstereoisomer der Formel 3-(4'-Brombiphenyl-4-yl)-1-(4-hydroxythiocoumarin-3-yl)-1,2,3,4-tetrahydronaphthalin umfasst, wobei die Kohlenstoffatome 1 und 3 der 1,2,3,4-Tetrahydronaphthalin-Gruppe von verschiedenen absoluten Konfigurationen sind, wobei der rodentizide Köder eine Menge an rechtsdrehendem Enantiomer des Heterostereoisomers derart umfasst, dass das Verhältnis dieser Menge auf die Menge des Difethialons im rodentiziden Köder weniger als 10 % beträgt;
wobei sich die Menge des rechtsdrehenden Enantiomers des Heterostereoisomers des Difethialons im rodentiziden Köder von der Menge an linksdrehendem Enantiomer des Heterostereoisomers des Difethialons im rodentiziden Köder unterscheidet.

6. Rodentizider Köder nach Anspruch 5, **dadurch gekennzeichnet, dass** er ein als Homostereoisomer bezeichnetes Konfigurationsstereoisomer des Difethialons der Formel 3-(4'-Brombiphenyl-4-yl)-1-(4-hydroxythiocoumarin-3-yl)-1,2,3,4-tetrahydronaphthalin umfasst, wobei die Kohlenstoffatome 1 und 3 der 1,2,3,4-Tetrahydronaphthalin-Gruppe von derselben absoluten Konfiguration sind, wobei der rodentizide Köder eine Menge eines linksdrehenden Enantiomers des Homostereoisomers des Difethialons derart umfasst, dass das Verhältnis der Menge an linksdrehendem Enantiomer des Homostereoisomers des Difethialons auf die Gesamtmenge des Difethialons im rodentiziden Köder weniger als 10 % beträgt.

7. Rodentizider Köder nach einem der Ansprüche 5 oder 6, **dadurch gekennzeichnet, dass** er eine Menge eines linksdrehenden Enantiomers des Heterostereoisomers des Difethialons derart umfasst, dass das Verhältnis der Menge an linksdrehendem Enantiomer des Heterostereoisomers des Difethialons im rodentiziden Köder auf die Gesamtmenge des Difethialons im rodentiziden Köder weniger als 10 % beträgt.

8. Rodentizider Köder nach einem der Ansprüche 5 bis 7, **dadurch gekennzeichnet, dass** der genießbare Hilfsstoff mindestens ein Lebensmittel umfasst, ausgewählt aus der Gruppe, die von den Getreidekörnern, den Vermahlungen von Getreidekörnern, den Mehlen von Getreidekörnern, den Flocken von Getreidekörnern, der Kleie von Getreiden und den Nicht-Getreide-Körnern gebildet wird.

9. Rodentizider Köder nach einem der Ansprüche 5 bis 8, **dadurch gekennzeichnet, dass** er eine Massenmenge an Difethialon derart umfasst, dass das Verhältnis dieser Massenmenge an Difethialon auf die Massenmenge des rodentiziden Köders weniger als 200 ppm beträgt.

10. Verfahren zur Bekämpfung von Ziel-Schadnagern, wobei eine Menge an rodentizidem Köder ausgebracht wird, der Difethialon und

- mindestens einen für Ziel-Schadnager genießbaren Hilfsstoff; und
- ein als Heterostereoisomer bezeichnetes Konfigurationsstereoisomer des Difethialons der Formel 3-(4'-Brombiphenyl-4-yl)-1-(4-hydroxythiocoumarin-3-yl)-1,2,3,4-tetrahydronaphthalin umfasst, wobei die Kohlenstoffatome 1 und 3 der 1,2,3,4-Tetrahydronaphthalin-Gruppe von verschiedenen absoluten Konfigurationen sind, wobei der rodentizide Köder eine Menge eines rechtsdrehenden Enantiomers des Heterostereoisomers derart umfasst, dass das Verhältnis dieser Menge auf die Menge des Difethialons im rodentiziden Köder weniger als 10 % beträgt;

wobei sich die Menge des rechtsdrehenden Enantiomers des Heterostereoisomers des Difethialons im rodentiziden Köder von der Menge an linksdrehendem Enantiomer des Heterostereoisomers des Difethialons im rodentiziden Köder unterscheidet.

11. Verfahren nach Anspruch 10, **dadurch gekennzeichnet, dass**:

- der genießbare Hilfsstoff;
- ein Anteil von jedem der Konfigurationsstereoisomere des Difethialons im Verhältnis zum Difethialon; und

- ein Massenanteil an Difethialon im Verhältnis zum rodentiziden Köder; und
- eine Menge an ausgebrachtem Köder;

in Kombination so ausgewählt werden, dass Ziel-Schadnager eine Menge an Difethialon aufnehmen, die ausreichend ist, um für die Ziel-Schadnager, die im Laufe eines einzigen Zeitraums von 24 aufeinanderfolgenden Stunden von dem Köder aufnehmen, tödlich zu sein.

**12.** Verfahren nach Anspruch 10, **dadurch gekennzeichnet, dass**:

- der genießbare Hilfsstoff;
- ein Anteil von jedem der Konfigurationsstereoisomere des Difethialons im Verhältnis zum Difethialon; und
- ein Massenanteil an Difethialon im Verhältnis zum rodentiziden Köder;

in Kombination so ausgewählt werden, dass Ziel-Schadnager eine Menge an Difethialon aufnehmen;

-- die für Ziel-Schadnager, die während eines einzigen Zeitraums von 24 aufeinanderfolgenden Stunden von dem Köder aufnehmen, nicht tödlich ist; und
-- die ausreichend ist, um für Ziel-Schadnager, die während mehreren 24-Stunden-Zeiträumen, wobei die Zeiträume aufeinanderfolgen, von dem Köder aufnehmen, tödlich zu sein.

**13.** Chromatographisches Verfahren zum Trennen von Konfigurationsstereoisomeren des Difethialons, wobei:

- eine Säule für Hochdruck-Flüssigchromatographie mit den Maßen 150 x 2 mm und eine aus Tris(4-methylbenzoat)-Zelluloseteilchen bestehende stationäre chirale Phase umfassend ausgewählt wird, wobei die Teilchen eine mittlere Größe von 3 μm aufweisen und eine mittlere Porengröße von 1000 Å aufweisen;
- als mobile Flüssigphase eine Mischung, die von Acetonitril (A) und Wasser gebildet wird, das 0,1 Volumen-% Ameisensäure (B) umfasst, mit einem Volumenverhältnis A/B von 80/20 und mit einem Durchsatz der mobilen Flüssigphase in der Chromatographiesäule von 0,25 mL/min. ausgewählt wird;
- eine Trennung der Konfigurationsstereoisomere des Difethialons bei Umgebungstemperatur ausgeführt wird, bei der;
- am Kopf der Säule für Chromatographie eine flüssige Zusammensetzung eingeleitet wird, die Difethialon umfasst; und anschließend
- die flüssige Zusammensetzung mit der mobilen Phase unter Bedingungen in der Säule für Chromatographie geführt wird, die dazu geeignet sind, die Konfigurationsstereoisomere des Difethialons zu trennen; und anschließend
- mindestens eine Fraktion der mobilen Phase abgesammelt wird, die ein Konfigurationsstereoisomer des Difethialons umfasst, das von den anderen, sich vom abgesammelten Konfigurationsstereoisomer unterscheidenden Konfigurationsstereoisomeren des Difethialons getrennt ist; und
- die mobile Flüssigphase aus der gesammelten Fraktion entfernt wird, um das gesammelte Konfigurationsstereoisomer des Difethialons zu erhalten.

## Claims

**1.** Composition comprising difethialone, **characterised in that** it comprises a configurational stereoisomer of difethialone, referred to as a hetero-stereoisomer, of formula 3-(4'bromobiphenyl-4-yl)-1-(4-hydroxythiocoumarin-3-yl)-1,2,3,4-tetrahydronaphtalene, wherein the carbon atoms 1 and 3 of the 1,2,3,4-tetrahydronaphtalene group have different absolute configurations, said composition comprising an amount of a dextrorotatory enantiomer of said hetero-stereoisomer such that the ratio of this amount to the amount of difethialone in the composition is less than 10%;
the amount of the dextrorotatory enantiomer of said hetero-stereoisomer of difethialone in the composition being different from the amount of levorotatory enantiomer of said hetero-stereoisomer of difethialone in the composition.

**2.** Composition according to claim 1, **characterised in that** it comprises an amount of levorotatory enantiomer of a configurational stereoisomer of difethialone, referred to as a homo-stereoisomer, of formula 3-(4'-bromobiphenyl-4-yl)-1-(4-hydroxythiocoumarin-3-yl)-1,2,3,4-tetrahydronaphtalene, wherein the carbon atoms 1 and 3 of the 1,2,3,4-tetrahydronaphtalene group are of the same absolute configuration (1S, 3S or 1R, 3R), with the amount of said levorotatory enantiomer of said homo-stereoisomer in the composition being such that the ratio of this amount to

the total amount of difethialone in the composition is less than 10%.

**3.** Composition according to one of claims 1 or 2, **characterised in that** it comprises an amount of levorotatory enantiomer of said hetero-stereoisomer of difethialone in the composition such that the ratio of this amount to the total amount of difethialone in the composition is less than 10%.

**4.** Composition according to one of claims 2 or 3, **characterised in that** it comprises an amount of dextrorotatory enantiomer of said homo-stereoisomer of difethialone such that the ratio of this amount to the total amount of difethialone in the composition is between 10% and 100%.

**5.** Rodenticide bait comprising difethialone and at least one edible excipient for target rodent pests, **characterised in that** it comprises a configurational stereoisomer of difethialone, referred to as a hetero-stereoisomer, of formula 3-(4'-bromobiphenyl-4-yl)-1-(4-hydroxythiocoumarin-3-yl)-1,2,3,4-tetrahydronaphtalene, wherein the carbon atoms 1 and 3 of the 1,2,3,4-tetrahydronaphtalene group have different absolute configurations, with the rodenticide bait comprising an amount of dextrorotatory enantiomer of said hetero-stereoisomer such that the ratio of this amount to the amount of difethialone in the rodenticide bait is less than 10%;
the amount of the dextrorotatory enantiomer of said hetero-stereoisomer of difethialone in the rodenticide bait being different from the amount of levorotatory enantiomer of said hetero-stereoisomer of difethialone in the rodenticide bait.

**6.** Rodenticide bait according to claim 5, **characterised in that** it comprises configurational stereoisomer of difethialone, referred to as a homo-stereoisomer, of formula 3-(4'-bromobiphenyl-4-yl)-1-(4-hydroxythiocoumarin-3-yl)-1,2,3,4-tetrahydronaphtalene, wherein the carbon atoms 1 and 3 of the 1,2,3,4-tetrahydronaphtalene group are of the same absolute configuration, with the rodenticide bait comprising an amount of a levorotatory enantiomer of said homo-stereoisomer of difethialone such that the ratio of the amount of levorotatory enantiomer of said homo-stereoisomer of difethialone on the total amount of difethialone in the rodenticide bait is less than 10%.

**7.** Rodenticide bait according to one of claims 5 or 6, **characterised in that** it comprises an amount of a levorotatory enantiomer of said hetero-stereoisomer of difethialone such that the ratio of the amount of levorotatory enantiomer of said hetero-stereoisomer of difethialone in the rodenticide bait to the total amount of difethialone in the rodenticide bait is less than 10%.

**8.** Rodenticide bait according to one of claims 5 to 7, **characterised in that** the edible excipient comprises at least one aliment chosen from the group comprised of cereal grains, millings of cereal grains, flours of cereal grains, flakes of cereal grains, cereal bran and non-cereal grains.

**9.** Rodenticide bait according to one of claims 5 to 8, **characterised in that** it comprises a mass amount of difethialone such that the ratio of this mass amount of difethialone to the mass amount of the rodenticide bait is less than 200 ppm.

**10.** Method for controlling target rodent pests, wherein an amount of rodenticide bait comprising difethialone is disseminated, and

- at least one edible excipient for target rodent pests, and;
- a configurational stereoisomer of difethialone, referred to as a hetero-stereoisomer, of formula 3-(4'-bromobiphenyl-4-yl)-1-(4-hydroxythiocoumarin-3-yl)-1,2,3,4-tetrahydronaphtalene, wherein the carbon atoms 1 and 3 of the 1,2,3,4-tetrahydronaphtalene group have different absolute configurations, with the rodenticide bait comprising an amount of a dextrorotatory enantiomer of said hetero-stereoisomer such that the ratio of this amount to the amount of difethialone in the rodenticide bait is less than 10%;

the amount of the dextrorotatory enantiomer of said hetero-stereoisomer of difethialone in the rodenticide bait being different from the amount of levorotatory enantiomer of said hetero-stereoisomer of difethialone in the rodenticide bait.

**11.** Method according to claim 10, **characterised in that** the following are chosen in combination:

- the edible excipient;
- a proportion of each one of the configurational stereoisomers of difethialone in relation to the difethialone, and;
- a mass proportion of difethialone in relation to the rodenticide bait, and;
- an amount of disseminated bait;

in such a way that the target rodent pests consume an amount of difethialone that is sufficient to be lethal for said target rodent pests consuming said bait during a single period of 24 consecutive hours.

**12.** Method according to claim 10, **characterised in that** on the following are chosen in combination:

- the edible excipient;
- a proportion of each one of the configurational stereoisomers of difethialone in relation to the difethialone, and;
- a mass proportion of difethialone in relation to the rodenticide bait;

in such a way that target rodent pests consume an amount of difethialone;

-- non-lethal for target rodent pests consuming said bait for a single period of 24 consecutive hours, and;
-- that is sufficient to be lethal for target rodent pests consuming said bait for several periods of 24 hours, said periods being consecutive.

**13.** Chromatographic method of separating configurational stereoisomers of difethialone, wherein:

- a column for high-pressure liquid chromatography is chosen with dimensions 150 x 2 mm and comprising a chiral stationary phase comprised of cellulose particles tris(4-methylbenzoate), said particles having an average size of 3 µm and having an average pore size of 1000 Å;
- as a liquid mobile phase, a mixture formed of acetonitrile (A) and water comprising 0.1% by volume of formic acid (B) is chosen,
with a volume ratio A/B of 80/20 and with a flow rate of the liquid mobile phase in the chromatography column of 0.25 mL/min;
- a separation of the configurational stereoisomers of difethialone at ambient temperature is carried out during which;
- a liquid composition comprising difethialone is introduced at the head of the chromatography column, then;
- the liquid composition is driven with the mobile phase in the chromatography column in conditions that are able to separate the configurational stereoisomers of difethialone, then;
- at least one fraction of the phase mobile is collected comprising a configurational stereoisomer of difethialone separated from the other configurational stereoisomer of difethialone separate from the configurational stereoisomer collected, and;
- the liquid mobile phase of said fraction collected is eliminated in such a way as to obtain the configurational stereoisomer of difethialone collected.

a1)

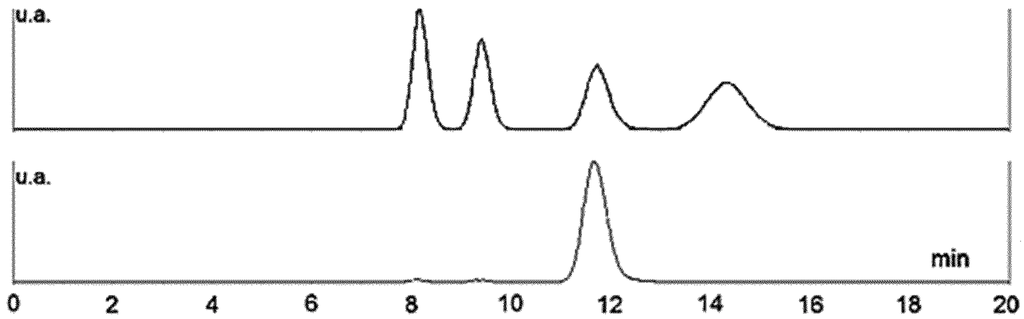
u.a.
u.a.
min
0
2
4
6
8
10
12
14
16
18
20

b1)

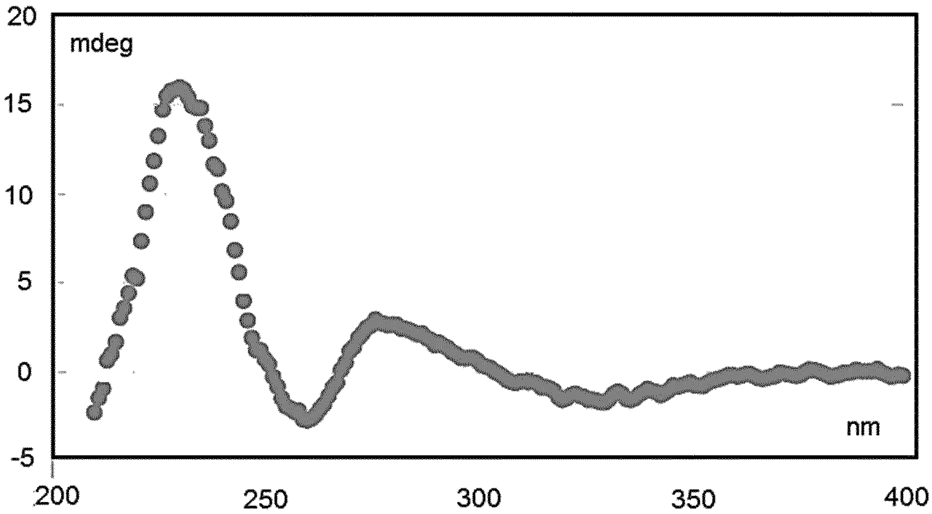
20
mdeg
15
10
5
0
-5
nm
200
250
300
350
400

c1)

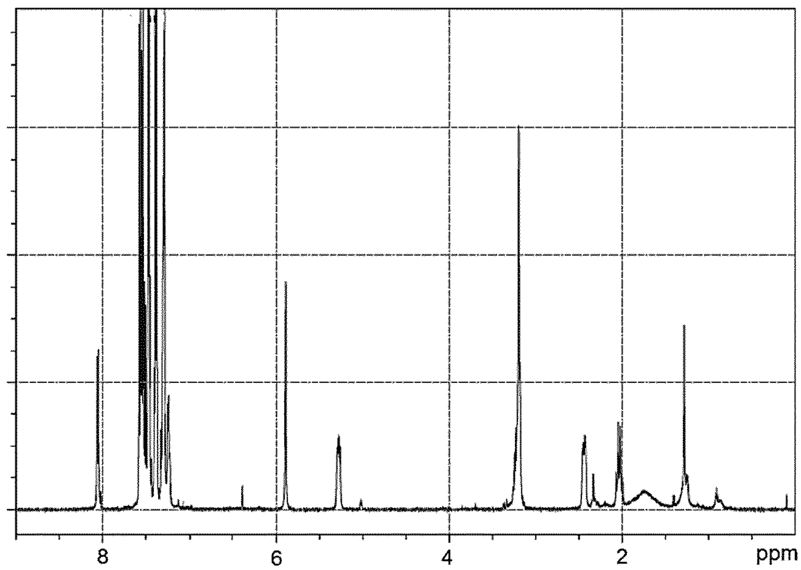
8
6
4
2
ppm

Fig 1

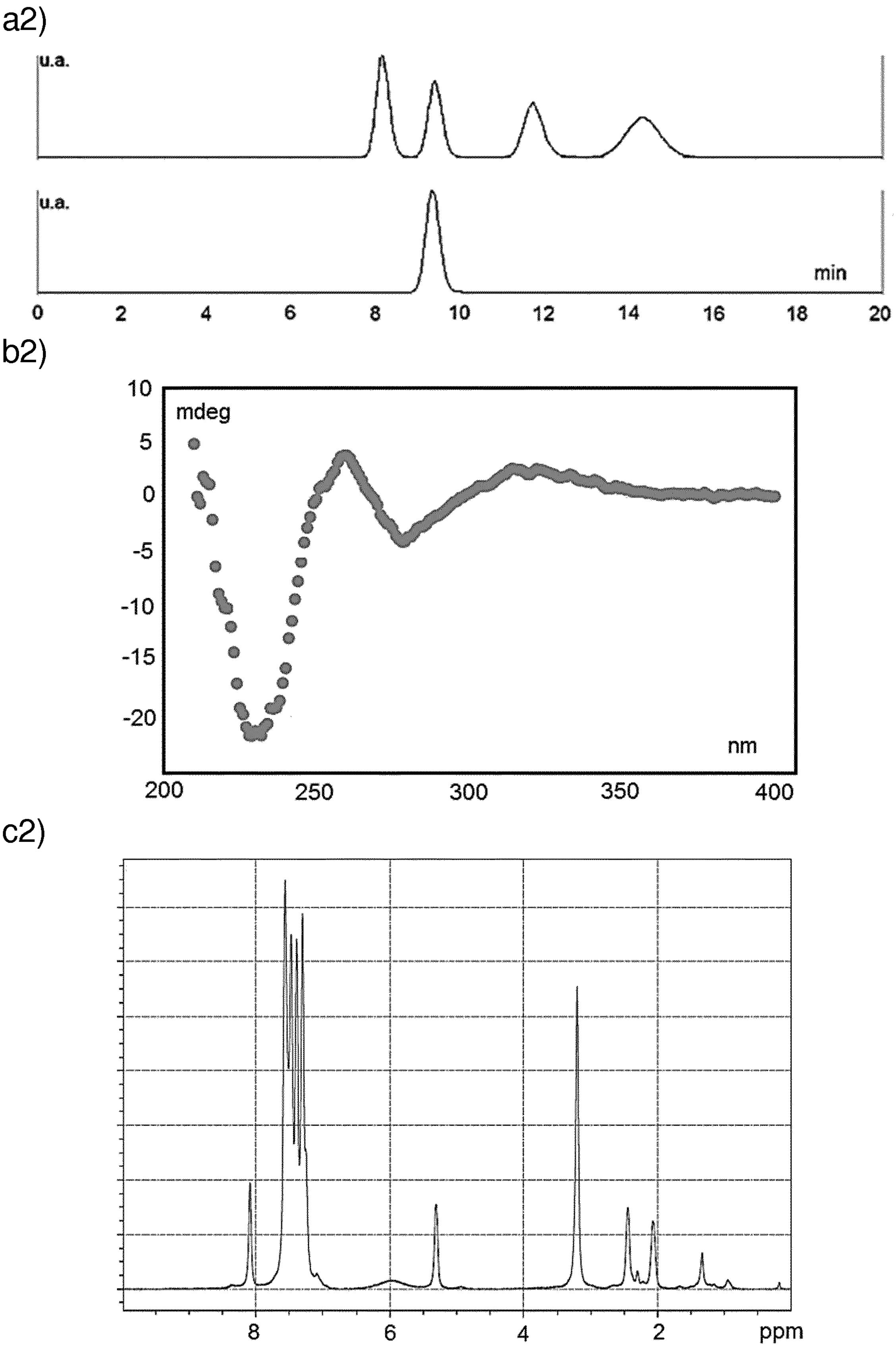
a2)
u.a.
u.a.
min
0
2
4
6
8
10
12
14
16
18
20
b2)
10
mdeg
5
0
-5
-10
-15
-20
nm
200
250
300
350
400
c2)
8
6
4
2
ppm

Fig 2

a3)

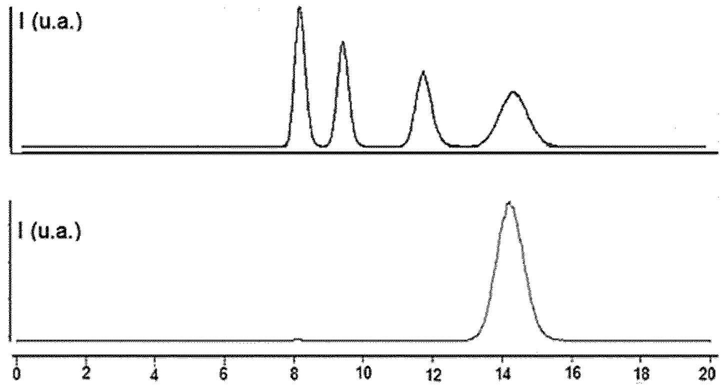
I (u.a.)
I (u.a.)
0
2
4
6
8
10
12
14
16
18
20

b3)

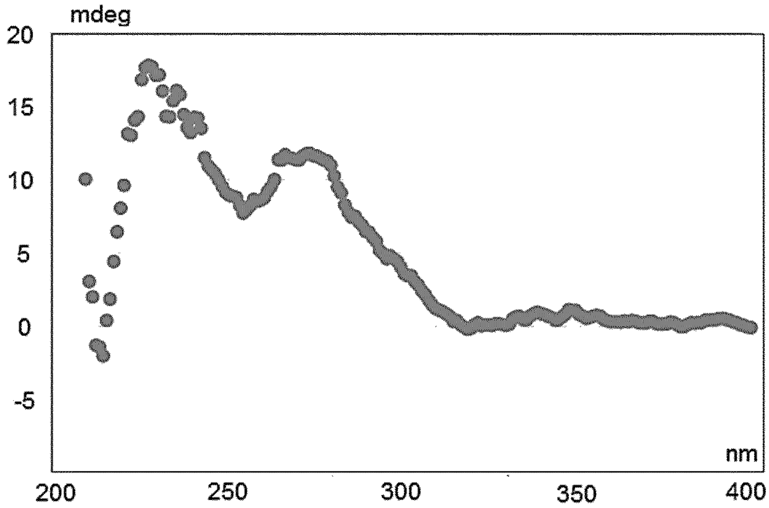
mdeg
20
15
10
5
0
-5
nm
200
250
300
350
400

c3)

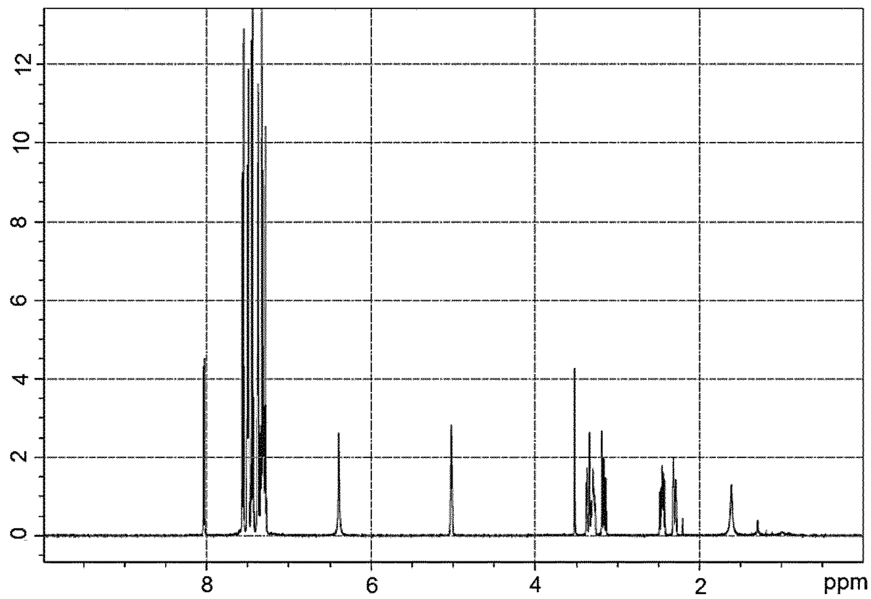
12
10
8
6
4
2
0
8
6
4
2
ppm

Fig 3

a4)

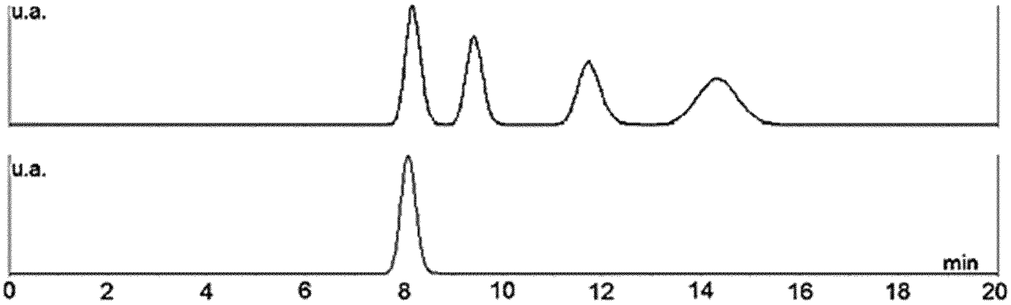
u.a.
u.a.
min
0
2
4
6
8
10
12
14
16
18
20

b4)

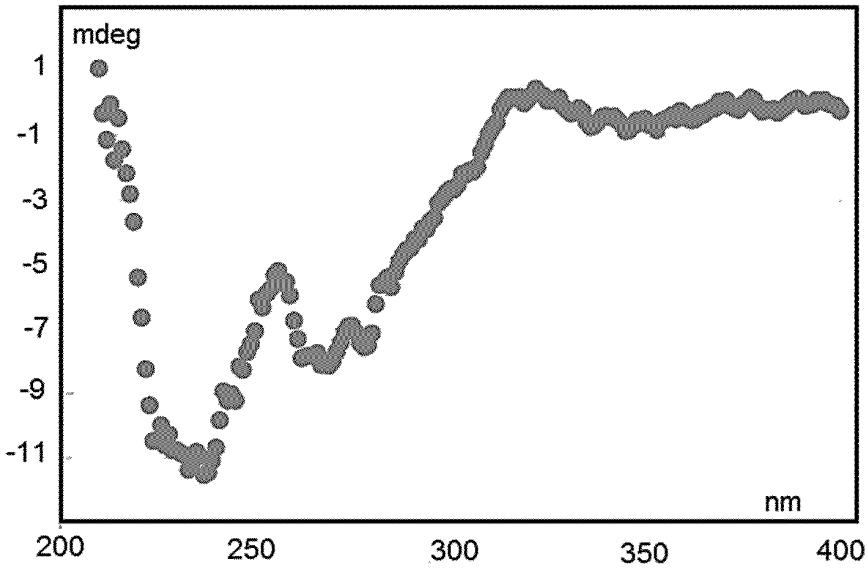
mdeg
1
-1
-3
-5
-7
-9
-11
nm
200
250
300
350
400

c4)

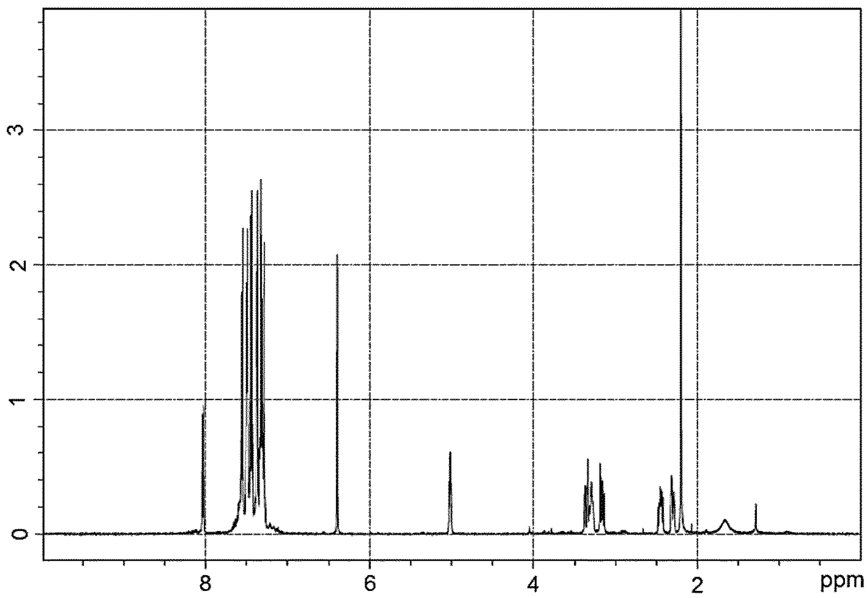
3
2
1
0
8
6
4
2
ppm

Fig 4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- EP 2090164 A
- US 2005181003 A